# EUROPEAN PATENT APPLICATION

(11) **EP 4 830 822 A1**
(43) Date of publication of application: **28.10.2026**
(21) Application number: 25382413.0
(22) Date of filing: 24.04.2025
(51) Int. Cl.: B01D 67/00

(54) **PHOTOCATALYTIC FLUX REACTOR**

(71) Applicant: Universidade de Vigo, 36310 Vigo (ES)
(72) Inventor: VÁZQUEZ GONZÁLEZ, Margarita, 36310 Vigo (ES); PUÉRTOLAS LACAMBRA, Begoña, 36310 Vigo (ES); SOUSA CASTILLO, Ana, 36310 Vigo (ES); ACUÑA CASAS, María Almudena, 36310 Vigo (ES); CORREA DUARTE, Miguel Ángel, 36310 Vigo (ES)
(74) Representative: Hoffmann Eitle

(57) **Abstract**

The present disclosure relates to a photocatalytic flux reactor configured for continuous flow operation and a method thereof. The reactor comprises a reaction chamber with at least one inlet port and at least one outlet port, the chamber incorporating a plasmonic photocatalytic membrane. The reactor further includes means for illuminating and/or allowing light access to the membrane within the reaction chamber, wherein said means may include a light source and/or a window. The plasmonic photocatalytic membrane comprises a plurality of nano- or micro-fibres of a polymer, within which nano- or micro-particle assemblies are embedded. Each micro or nano-particle assembly comprises one or more plasmonic metallic nano- or micro-particles, one or more nano- or micro-particles of a second semiconductor material and/or metal ions, and optionally one or more nano- or micro-particles of a first semiconductor material or an insulating material. The reactor is designed to facilitate photocatalytic reactions under continuous flow conditions and membrane illumination, enabling efficient processing of reactants through the reaction chamber.

## Description

### Technical field of the invention

The present invention belongs to the field of photocatalytic reactor technology and, more specifically, to the design and fabrication of continuous flow photocatalytic systems. It relates to reactors that incorporate advanced membrane technologies-wherein the membranes are formed of nano- or micro-fibres of synthetic polymers embedded with nanoparticle assemblies.

### Background of the invention

The industrial production of ammonia (NH₃) and methanol (CH₃OH) is of paramount importance to global agriculture and chemical manufacturing. Ammonia serves as the principal precursor for fertilizers, while methanol is a key building block for a multitude of chemical syntheses and holds promise as an alternative energy carrier. Currently, ammonia is predominantly synthesized via the Haber-Bosch process-a method that operates under extreme pressures and temperatures, consumes a significant fraction of global energy, and relies heavily on fossil fuels. Similarly, conventional methanol production typically involves the processing of syngas derived from fossil resources, leading to substantial environmental and economic drawbacks due to high energy demands and associated greenhouse gas emissions.

In response to these challenges, photocatalysis has emerged as a sustainable alternative that harnesses solar energy to drive chemical reactions under ambient conditions. Semiconductor photocatalysts, such as titanium dioxide and related metal oxides, are capable of absorbing solar radiation to initiate redox processes. However, their practical application is limited by inherent issues such as rapid electron-hole recombination, which significantly reduces the efficiency of the photocatalytic process and, in turn, the attainable chemical yields.

To address these efficiency limitations, researchers have increasingly turned to plasmonic nanoparticles-commonly composed of metals like gold or silver-as a means to enhance light absorption through localized surface plasmon resonance (LSPR). These nanoparticles can generate energetic "hot" electrons upon light irradiation, thereby promoting charge transfer to adjacent semiconductor materials and mitigating recombination losses. Despite the promising laboratory-scale results achieved with plasmonic enhancement for generating certain molecules of interest, several critical challenges remain unresolved, particularly with respect to scaling these systems for industrial application.

Moreover, there is a lack of nanoparticles or assemblies of nanoparticles suitable for the task of photocatalytic synthesis of ammonia and methanol, and, from the few nanoparticle candidates and composite systems that have been investigated, none have yet demonstrated a combination of high efficiency, ease of fabrication, and scalability necessary for industrial use. In addition, they employ complex synthesis routes that are not readily adaptable to large-scale production and often require rare or toxic materials. Furthermore, issues such as nanoparticle aggregation, insufficient stability over extended operation periods, and challenges in achieving uniform dispersion have significantly hindered their practical application. As a result, these candidate systems frequently fall short in delivering consistent, high-yield performance, and show limited economic and environmental viability.

Another major limitation is that existing plasmonic photocatalysts are generally suitable for small reactions in controlled experimental settings, rather than for continuous, high-throughput processes. The integration of these nanoparticle systems into scalable, industrial reactors has proven problematic. A central issue is the difficulty in achieving uniform dispersion and long-term stability of complex nanoparticle assemblies-comprising semiconductor and plasmonic components-within a suitable support matrix. Traditional supports often fail to provide the optimal balance of mechanical integrity, light harvesting efficiency, and effective charge transfer pathways, all of which are critical for maintaining high catalytic activity over extended operational periods.

Furthermore, many current photocatalytic approaches rely on the use of sacrificial reagents or operate under conditions that do not readily translate to high-yield, efficient large-scale production.

In light of these limitations, it is evident that there is a critical need for a novel photocatalytic system capable of overcoming the challenges inherent in current methodologies. Such a system should address the deficiencies of rapid charge recombination, limited scalability, and inadequate catalyst stabilization. Additionally, it should be sustainable, cost-effective, and present a high-yield production of ammonia and methanol under ambient conditions using renewable resources.

### Summary of the invention

Existing photocatalytic systems present several limitations that require to be addressed. Conventional approaches suffer from rapid electron-hole recombination, complex synthesis routes, and difficulties in scaling laboratory-scale systems for industrial applications. Moreover, the existing solutions often require rare or toxic materials, exhibit nanoparticle aggregation, and display insufficient stability under prolonged operation. Additionally, known systems lack of a continuous flow design, which limits completely the industrial applicability of such approaches, the achievable chemical yields and the economic viability of the process.

In view of these limitations, the present invention provides a photocatalytic continuous flow reactor that integrates a novel photocatalytic membrane that overcome all the above-mentioned challenges. The membrane of the system of the invention is fabricated from electrospun polymeric nano- or micro-fibres within which are embedded specially engineered nanoparticle assemblies. The membrane disclosed herein provides a high degree of dispersion and long-term stability of the nanoparticle assemblies, while also facilitating enhanced light absorption and improved charge separation. This way the system of the invention provides an efficient, scalable, and sustainable platform for photocatalytic reactions under ambient conditions.

The photocatalytic effect is achieved by employing novel nano particle assemblies that leverage the synergetic interaction of plasmonic and semiconductor materials in photocatalytic applications that require absorbing light and diverting the absorbed energy towards promoting chemical reactions. At the core of the invention's working principle is a nano particle assembly comprising semiconductor nanoparticles or metal ions, which are employed to harvest solar energy and generate electron-hole pairs necessary for photocatalytic activity. Additionally, plasmonic photocatalytic metallic nanoparticles are integrated in the nano particle assembly, allowing to enhance light absorption through localized surface plasmon resonance, a phenomenon that generates energetic "hot" electrons and significantly improves the charge transfer processes. Third, and optionally, nanoparticles of an insulating material are included to act as a support, the additional insulating particles facilitate uniform embedding of the nanoparticle assemblies into the membrane fibres, thereby enhancing mechanical stability and catalytic performance. It is noted that this support, in some embodiments, can also be provided by the polymeric fibres that form the membrane that comprises the nano particle assemblies, therefore in some embodiments the nano- or micro-particles of an insulating material are not comprised in the nanoparticle assemblies. Additionally, the configuration of embedding these photocatalytic nanoparticle assemblies inside the polymeric membrane fibres facilitates the separation of the charges upon light absorbance, delaying recombination enough to enable photocatalyzed chemical reactions.

The integration of the photocatalytic membrane within a continuous flow reactor that allows incoming light to reach the membrane, or directly produces said light, allows a constant and controlled supply of reactants and efficient removal of products that meets industrial productivity requirements.

As shown in the examples, the present invention achieves high-yield production of ammonia and methanol by combining an optimized nanoparticle assembly with a robust, scalable membrane design, all within a continuous flow reactor that leverages renewable solar energy. This inventive approach represents a significant advancement in photocatalytic reactor technology, offering an efficient, environmentally sustainable, and economically viable alternative to conventional chemical production processes.

A first aspect of the invention refers to a photocatalytic flux reactor comprising a reaction chamber with at least one inlet port and at least one outlet port, wherein said reaction chamber comprises a plasmonic photocatalytic membrane. The reactor further comprises means for illuminating and/or allowing light access to the membrane within the reaction chamber, preferably wherein said means for illuminating and/or allowing light access comprise a light source and/or a window, and wherein said means for illuminating and/or allowing light access may be comprised in the reaction chamber. The reactor is preferably configured to operate under a continuous flow of reactants from the at least one inlet port towards the at least one outlet port through the reaction chamber. The plasmonic photocatalytic membrane comprises a plurality of nano- or micro-fibres of at least one synthetic polymer, wherein said nano- or micro-fibres comprise a plurality of nano- or micro-particle assemblies embedded within them, each of said assembly comprising optionally one or more nano- or micro-particles of a first semiconductor or insulating material, one or more plasmonic metallic nano- or micro-particles, and one or more nano- or micro-particles of a second semiconductor material and/or one or more metal ions.

In a preferred embodiment of the first aspect of the invention, the one or more nano- or micro-particles of an insulating material are optionally silicon dioxide nano- or micro-particles. The one or more plasmonic metallic nano- or micro-particles comprise Au, Ag, Cu, Pt, Pd, Al, Ni, Zn and/or Ti nano- or micro-particles or any combination or alloy thereof, preferably comprise or consist of gold nanoparticles, more preferably gold nanostars. The one or more nano- or micro-particles of a second semiconductor material are titanium dioxide nano- or micro-particles.

In another preferred embodiment of the first aspect of the invention, the one or more nano- or micro-particles of a first semiconductor or insulating material are optionally nano- or micro-particles of a metal-organic framework (MOF), preferably comprise one of a University of Oslo variant, more preferably comprise UiO-67-bipyridine. Preferably the one or more plasmonic photocatalytic metallic nano- or micro-particles are gold nano- or micro-particles, preferably gold nanospheres. Preferably the one or more metal ions are copper ions Cu²⁺ and/or Cu⁺.

In another preferred embodiment of the invention, the synthetic polymer of the membrane comprises or consists of polyvinyl alcohol, polycaprolactone, polyethylene oxide, polyacrylonitrile, polylactic acid, polystyrene, polyvinylpyrrolidone, polyethylene terephthalate, polymethyl methacrylate, polyurethane, and/or nylon-6, preferably polyvinyl alcohol.

According to a preferred embodiment of the invention, the reactor comprises at least two inlet ports, of which at least one is a liquid inlet port, preferably for water, and at least one is a gas inlet port, preferably for N₂, CO₂, or air, preferably wherein the exit of the gas inlet port that communicates with the reaction chamber is positioned perpendicular to the plasmonic photocatalytic membrane, preferably centred relative to the midpoint of said membrane, more preferably located beneath said membrane.

In another preferred embodiment of the first aspect of the invention, the membrane comprising the nano- or micro-particles is made by electrospinning a medium or suspension comprising the synthetic polymer and the plurality of nano- or micro assemblies, such that the nano- or micro assemblies become embedded within the nano- or micro-fibres during the electrospinning process.

In a second aspect of the invention, the reactor is used to generate NH₃ as a product, wherein water and a gas comprising N₂, said gas being preferably atmospheric air or purified N₂, are continuously supplied as reactants to the reactor through at least one inlet port, and wherein NH₃ is continuously obtained from at least one outlet port.

In a third aspect of the invention, the reactor is used to generate CH₃OH as a product, wherein water and a gas comprising CO₂, said gas being preferably atmospheric air or purified CO₂, are continuously supplied as reactants to the reactor through at least one inlet port, and wherein CH₃OH is continuously obtained from at least one outlet port.

In a fourth aspect of the invention, a method is provided for manufacturing a photocatalytic membrane for use in the reactor according to the first aspect of the invention, comprising the following steps: providing a medium or suspension comprising a synthetic polymer, preferably PVA, and a plurality of nano- or micro assemblies of particles, wherein each of said nano- or micro assemblies comprises one or more nano- or micro-particles of a first semiconductor or insulating material, one or more plasmonic photocatalytic metallic nano- or micro-particles, and one or more nano- or micro-particles of a second semiconductor material or one or more metal ions. The method further comprises generating the nano- or micro-fibres by electrospinning the medium provided in the previous step, wherein the plurality of nano- or micro assemblies of particles are embedded within said nano- or micro-fibres, and collecting or assembling said nano- or micro-fibres to form a membrane.

In a preferred embodiment of the fourth aspect of the invention, the one or more nano- or micro-particles of an insulating material are silicon dioxide nano- or micro-particles. Preferably the one or more plasmonic photocatalytic metallic nano- or micro-particles are gold nano- or micro-particles, preferably gold nanostars. Preferably the one or more nano- or micro-particles of a second semiconductor material are titanium dioxide nano- or micro-particles.

In another preferred embodiment of the fourth aspect of the invention, the one or more nano-or micro-particles of a first semiconductor or insulating material are nano- or micro-particles of a metal-organic framework (MOF), preferably comprising a University of Oslo variant, more preferably comprise UiO-67-bipyridine. The one or more plasmonic photocatalytic metallic nano- or micro-particles are preferably gold nano- or micro-particles, preferably gold nanospheres. The one or more metal ions are preferably copper ions (Cu²⁺).

In a fifth aspect of the invention, a method is provided for obtaining a continuous flow of NH₃ in a photocatalytic flux reactor according to the first aspect, comprising at least one inlet port, at least one outlet port, and a reaction chamber comprising a plasmonic photocatalytic membrane. The method comprises the following steps: providing a solution comprising N₂ and H₂O through a first inlet port, and/or providing a gas comprising N₂ through a gas inlet port and a liquid comprising H₂O through a liquid inlet port; contacting said solution, or the gas and the liquid, with the plasmonic photocatalytic membrane, the membrane comprising a plurality of nano- or micro assemblies of particles, wherein each of said nano- or micro assemblies comprises optionally one or more nano- or micro-particles of a first semiconductor or insulating material, one or more plasmonic photocatalytic metallic nano- or micro-particles, and one or more nano- or micro-particles of a second semiconductor material or one or more metal ions, and wherein said membrane is exposed to light; and obtaining NH₃ through at least one outlet port.

In a preferred embodiment of the fifth aspect of the invention, the one or more nano- or micro-particles of an insulating material are silicon dioxide nano- or micro-particles. Preferably, the one or more plasmonic photocatalytic metallic nano- or micro-particles are gold nano- or micro-particles, preferably gold nanostars. Preferably, the one or more nano- or micro-particles of a second semiconductor material are titanium dioxide nano- or micro-particles.

In a sixth aspect of the invention, a method is provided for obtaining a continuous flow of CH₃OH in a photocatalytic flux reactor according to the first aspect, comprising at least one inlet port, at least one outlet port, and a reaction chamber comprising a plasmonic photocatalytic membrane. The method comprises the following steps: providing a solution comprising CO₂ and H₂O through an inlet port, and/or providing a gas comprising CO₂ through a gas inlet port and a liquid comprising H₂O through a liquid inlet port; contacting said solution, or the gas and liquid, with the plasmonic photocatalytic membrane, the membrane comprising a plurality of nano- or micro assemblies of particles, wherein each of said nano- or micro assemblies comprises optionally one or more nano- or micro-particles of a semiconductor or an insulating material, one or more plasmonic photocatalytic metallic nano- or micro-particles, and one or more nano- or micro-particles of a second semiconductor material or one or more metal ions, and wherein said membrane is exposed to light; and obtaining CH₃OH through at least one outlet port.

In a preferred embodiment of the sixth aspect of the invention, the one or more nano- or micro-particles of a first semiconductor or insulating material are nano- or micro-particles of a metal-organic framework (MOF), preferably comprising a University of Oslo variant, more preferably UiO-67-bipyridine. The one or more plasmonic photocatalytic metallic nano- or micro-particles are gold nano- or micro-particles, preferably gold nanospheres. The one or more metal ions are copper ions (Cu²⁺).

### Brief description of the drawings

To enable a better understanding of the present disclosure, and to show how the present disclosure may be carried out, reference will now be made, by way of example only, to the accompanying schematic drawings, wherein:
Figure 1 shows a schematic drawing of the creation by electrospinning of the polymeric membrane with photocatalytic nanoparticle assemblies embedded inside the membrane fibres, according to one or more embodiments of the invention.
Figure 2 shows a representation of a photocatalytic nanoparticle assembly according to one or more embodiments of the invention. It can be appreciated the presence of plasmonic nano-stars attached to a sphere of insulator material, and semiconductor smaller spheres attached to both the nano-stars and covering the surface of the insulator sphere.
Figure 3 shows a schematic representation of a flux reactor according to one or more embodiments of the invention, wherein the flux reactor presents one inlet port for water and CO₂ or N₂, and one outlet port for water and methanol or ammonia, wherein said inlet and outlet ports are fluidly connected to a reaction chamber comprising a photocatalytic membrane able to receive input light.
Figure 4 shows a schematic representation of a flux reactor according to one or more embodiments of the invention, wherein the flux reactor presents one inlet port for water, one inlet port for CO₂ or N₂, and one outlet port for water and methanol or ammonia, wherein said inlet and outlet ports are fluidly connected to a reaction chamber comprising a photocatalytic membrane able to receive input light.
Figure 5 shows a three-dimensional render of a photocatalytic continuous flow reactor reactor according to one or more embodiments of the invention.
Figure 6 shows a membrane made in electrospinning according to one or more embodiments of the invention, wherein in this example the fibres of the membrane are made of a polymeric material (PVA) and photocatalytic nanoparticle assemblies (SiO2@AuNSTs@TiO2) are embedded or encapsulated inside said fibres.
Figure 7 shows a bar chart of the ammonia production yield related to different nanoparticle assemblies embedded in a synthetic polymer membrane comprised in a reactor according to one or more embodiments of the invention.
Figure 8 shows a bar chart of the ammonia production yield of a photocatalytic flux reactor according to one or more embodiments of the invention wherein the plasmonic photocatalytic membrane is under illumination and in darkness.

### Description of the invention

### Definitions

As used herein, "a" or "an" means "at least one" or "one or more."

It is noted that the term "about", if used herein, refers to +/- 30%, preferably +/- 20%, preferably +/- 15%, more preferably +/- 10%, of the indicated referred value. It may also refer to the exact value, that is, +/- 0% or +/- the standard measurement error. Also, any quantity, composition percentages and/or dimension mentioned herein is understood to present an error of +/- 30%, preferably +/- 20%, preferably +/- 15%, more preferably +/- 10%, more preferably +/- 5% or +/-0% of the indicated value. It may also refer to the exact value, that is, +/- 0% or +/- the standard measurement error.

As used herein, the conjunctive term "and/or" between multiple recited elements is understood as encompassing both individual and combined options. For instance, where two elements are conjoined by "and/or", a first option refers to the applicability of the first element without the second. A second option refers to the applicability of the second element without the first. A third option refers to the applicability of the first and second elements together.

When used herein the term "comprising" can be substituted with the term "containing" or "including" or sometimes when used herein with the term "having".

When used herein "consisting of" excludes any element, step, or ingredient not specified in the claim element. When used herein, "consisting essentially of" does not exclude materials or steps that do not materially affect the basic and novel characteristics of the claim.

Unless defined otherwise, all technical and scientific terms used herein have the same meaning as is commonly understood by one of ordinary skill in the art to which this invention belongs. All patents, applications, published applications and other publications referred to herein are incorporated by reference in their entirety. If a definition set forth in this section is contrary to or otherwise inconsistent with a definition set forth in applications, published applications and other publications that are herein incorporated by reference, the definition set forth in this section prevails over the definition that is incorporated herein by reference.

The term "photocatalytic flux reactor", in the context of the invention, refers to a reactor system designed for carrying out photocatalytic reactions under continuous flow conditions. This term encompasses any reactor configuration in which reactants can be continuously introduced into a reaction chamber to interact with a photocatalytic element, and from which products are continuously removed. The reactor may be configured for various photocatalytic processes, including but not limited to the synthesis of methanol from carbon dioxide and water or the production of ammonia from nitrogen and water. The reactor's operational parameters, such as flow rates, pressure ranges, illumination density on the incident surface, membrane size and temperature conditions may vary depending on the specific application.

The term "reaction chamber", in the context of the invention, refers to the enclosed or semi-enclosed space within the reactor where the photocatalytic reaction is performed. This chamber is specifically designed to facilitate the interaction between the reactants and the plasmonic photocatalytic membrane. The reaction chamber is in fluid communication with at least one inlet port for the introduction of reactants and at least one outlet port for the removal of reaction products. The reaction chamber is preferably constructed to include one or more windows, apertures, or integrated illuminating means, all of which serve to allow or enhance light access into the chamber. Such design features ensure that the embedded nanoparticle assemblies within the membrane are effectively activated by ambient, solar, or artificially generated light, thereby enabling the photocatalytic process. The chamber may be constructed of various materials, including transparent or translucent polymers, metals, or ceramics, provided they are compatible with the reaction conditions.

The term "plasmonic photocatalytic membrane", in the context of the invention, refers to a membrane composed of nano- or micro-fibres, preferably fabricated by electrospinning a synthetic polymer, within which are embedded nanoparticle or nanoparticle assemblies that exhibit photocatalytic properties. These nanoparticle assemblies preferably comprise semiconductor particles or metal ions that are capable of harvesting light to generate electron-hole pairs, plasmonic metallic nanoparticles that enhance light absorption through localized surface plasmon resonance, and, optionally, insulating nanoparticles that serve as support structures. The integration of these components within the fibrous matrix confers significant advantages, such as improved catalyst stability, preventing the nanoparticles from being easily removed from the membrane, enhanced porosity for the infiltration of reactants like water and gases, and efficient light penetration. The term may encompass a broad range of fibre diameters, polymer compositions, nanoparticle assemblies, and combinations thereof.

The term "means for illuminating and/or allowing light access", in the context of the invention, refers to any structural or functional components that facilitate the introduction or generation of light within the reaction chamber to activate the photocatalytic membrane. Such means may include physical apertures, windows, or transparent sections in the reactor walls that permit external light, whether ambient or solar, to enter the chamber. In some embodiments, these means may comprise integrated light sources, such as lamps, light-emitting diodes (LEDs), or other devices that emit light in the visible, ultraviolet (UV), and/or infrared (IR) spectrums. These illuminating elements may be configured to operate on various power sources, may be integrated with means to allow light access to complement each other, such as, for example, using illuminating means at night, and solar light during day time.

The term "reactants", in the context of the invention, refers to the chemical species introduced into the photocatalytic reactor that actively participate in the chemical transformations to yield desired products. In preferred embodiments, the reactants include water and nitrogen when synthesizing ammonia, and water and carbon dioxide when synthesizing methanol. However, the term is intended to be broad, encompassing any chemical substances that undergo transformation during the photocatalytic process. The designation "reactants" is used rather than "reagents" to emphasize that these substances are consumed and altered by the reaction rather than serving merely as auxiliary chemicals.

The term "nano- or micro-fibres", in the context of the invention, refers to elongated filamentous structures (nanofibers or microfibres) with diameters preferably in the nanometre scale. These fibres are preferably produced by electrospinning, which yield a porous, interconnected network that serves as the support matrix for embedded nanoparticle assemblies inside the hollow fibres. The high surface area, tuneable porosity, and mechanical integrity of the nano-or micro-fibres facilitate the efficient diffusion of reactants and penetration of light into the membrane.

The term "synthetic polymer", in the context of the invention, refers to an artificially produced macromolecular material that forms the structural matrix of the photocatalytic membrane. Preferably, the synthetic polymer is polyvinyl alcohol (PVA) due to its excellent solubility, processability, and compatibility with nanoparticle incorporation. However, it may also encompass any suitable synthetic polymer, including but not limited to polyethylene, polypropylene, polyacrylonitrile, polyesters, and other polymers known for their chemical stability, mechanical properties, and ability to form fibres under appropriate processing conditions.

The term "nano or micro assemblies", in the context of the invention, refers to aggregates or assemblies of nano- or micro-scale particles that function together as a single unit within the membrane. These assemblies may be composed of one or more types of nano or micro particles, such as semiconductor particles for light harvesting, plasmonic metallic nanoparticles for enhanced light absorption and charge transfer, and optionally insulating particles or incorporated metallic ions for structural support. The assemblies may take various forms, including core-shell configurations, spherical aggregates surrounded by satellite particles (for example, nanospheres or nanostars), or other composite arrangements designed to optimize photocatalytic performance.

The term "nano- or micro-particles", in the context of the invention, refers to discrete particulate entities with one or more dimensions in the nanometre to micrometre range. These particles may comprise a wide variety of materials, such metals, metal oxides, semiconductors, and insulators. Additionally, they may exhibit a broad range of morphologies such as, but not limited to, spheres, rods, stars, cubes, or irregular shapes, and may be used individually or as components of more complex assemblies.

The term "insulating material", in the context of the invention, refers to any material that exhibits a high electrical resistivity and provides a stable support or spacer for the embedded nanoparticle assemblies. Such materials are characterized by their low electrical conductivity and are employed to prevent undesired charge transfer between adjacent photocatalytic components while maintaining structural integrity. Examples of insulating materials include ceramics such as silicon dioxide (SiO₂) and aluminium oxide (Al₂O₃), glasses, certain high-performance polymers, and even insulating particles derived from metal-organic frameworks. The term is intended to be broad and encompasses any substance that does not readily conduct electrical current and that can be employed to enhance the dispersion and stability of photocatalytic nanoparticles within the membrane.

The term 'plasmonic photocatalytic metallic nano- or micro-particles', in the context of the invention, refers to metallic particles having one or more dimensions in the nanometre to micrometre range that exhibit plasmonic properties. These particles are capable of resonantly enhancing local light absorption through localized surface plasmon resonance (LSPR), which not only increases the effective absorption cross-section of adjacent semiconductor materials but also generates energetic 'hot' electrons. These hot electrons may be injected into the conduction band of the semiconductor, thereby increasing the density of charge carriers available for the photocatalytic reaction and assisting in charge separation by reducing electron-hole recombination. The term may encompass nanoparticles or microparticles comprising metallic materials such as gold, silver, copper, platinum, palladium, aluminium, nickel, zinc, and titanium, or any alloy or combination thereof, or assemblies of nano- or micro-particles comprising any of such materials in addition to others, as long as they exhibit metallic and plasmonic properties. Said plasmonic photocatalytic metallic nano- or micro-particles may present various shapes such as, but not limited to, spheres, rods, stars, or irregular morphologies. Preferably, these particles are gold nanostars or gold nanospheres.

The term "nano- or micro-particles of a second semiconductor material", in the context of the invention, refers to semiconductor particles having one or more dimensions in the nanometre to micrometre range that can absorb light and generate electron-hole pairs, and which may be employed for driving photocatalytic reactions. These particles may be made from metal oxides such as, but not limited to, titanium dioxide (TiO₂), zinc oxide (ZnO), or tungsten oxide (WO₃), among others, and may vary in size from one or tens of nanometres to one or tens of micrometres. The semiconductor particles serve as the primary light-harvesting component in the photocatalytic system, initiating the charge separation necessary for the subsequent chemical transformations, and are intended to be broadly inclusive of any particulate form that exhibits semiconductor behaviour under the reaction conditions.

The term "metal ions", in the context of the invention, refers to atomic, molecular or ionic species of metals that may be incorporated into the nanoparticle assemblies to provide catalytic activity or act as charge mediators. These metal ions, which can be present in one or more oxidation states (such as, but not limited to, Cu²⁺, Cu⁺, or Cu°), are used either as dopants or as coordinated species within the nanoparticle assemblies to enhance the photocatalytic process. In some embodiments metal ions may be introduced via solution-based processing, post-synthetic modification, or other means that integrate them into the photocatalytic matrix.

The term "gold nanostars", in the context of the invention, refers to a specific class of gold nanoparticles characterized by a star-like morphology with multiple pointed tips or branches. This distinctive shape leads to enhanced localized electromagnetic fields at the tips through plasmonic effects, making them particularly effective in boosting light absorption and facilitating charge transfer in photocatalytic applications. In some embodiments gold nanostars may exhibit size ranges from tens to hundreds of nanometres overall and can be synthesized using various chemical and physical methods. The term may refer to all variations of star-shaped gold nanoparticles, regardless of slight differences in branch number, length, or angular configuration, provided they exhibit the plasmonic properties that enhance photocatalytic activity.

The term "metal-organic framework", in the context of the invention, refers to a class of crystalline materials consisting of metal ions or clusters coordinated to organic ligands, forming one-, two-, or three-dimensional porous structures. Metal-organic frameworks (MOFs) are noted for their exceptionally high surface areas, tuneable pore sizes, and adjustable chemical functionalities, which make them ideal as insulating supports in photocatalytic systems. Examples include, but are not limited to, UiO-67-bipyridine, ZIF-8, and MIL-series frameworks.

The term "electrospinning", in the context of the invention, refers to a fibre fabrication process that employs a high-voltage electric field to draw charged threads of polymer solution or melt from a spinneret to a grounded collector, resulting in the formation of nano- or micro-scale fibres, that can be collected into different shapes such as a planar membranes, among other possibilities. This technique enables the production of non-woven mats with high surface area, tuneable porosity, and controlled fibre diameters (ranging typically from tens of nanometres to several micrometres) which are suitable for embedding nanoparticle assemblies. Electrospinning is applicable to a wide variety of synthetic polymers and allows for the incorporation of additional components such as nanoparticles directly into the fibre matrix.

### Description

In this invention, backed up on the examples, we develop a method and a reactor (1) that addresses the aforementioned issues and successfully solves them.

Each embodiment disclosed herein is contemplated as being applicable to each of the other disclosed embodiments. Thus, all combinations of the various elements described herein are within the scope of the invention. It should also be understood that, unless clearly indicated to the contrary, in any methods claimed herein that include more than one step or act, the order of the steps or acts of the method is not necessarily limited to the order in which the steps or acts of the method are recited.

In a first aspect of the invention a photocatalytic continuous flow reactor (1), or photocatalytic flux reactor (1), is disclosed. The photocatalytic continuous flow reactor (1) of the invention comprises a reaction chamber (2) with at least one inlet port (21) and at least one outlet port (22), wherein said reaction chamber (2) comprises a plasmonic photocatalytic membrane (3); and means for illuminating and/or allowing light access (4) to the membrane (3) within the reaction chamber (2), preferably wherein said means for illuminating and/or allowing light access (4) comprise a light source and/or a window, and wherein said means for illuminating and/or allowing light access may be comprised in the reaction chamber (2). The reaction chamber (2) is preferably configured to receive water saturated with a gas through at least one inlet port (21), or water through a first inlet port (211) and gas through a second inlet port (212). Additionally, water may be received as liquid water and/or water vapor in some embodiments. Preferably the reaction chamber (2) is illuminated.

It is noted that the reactor (1) is configured to operate under a continuous flow of reactants from the at least one inlet port (21) towards the at least one outlet port (22) through the reaction chamber (2).

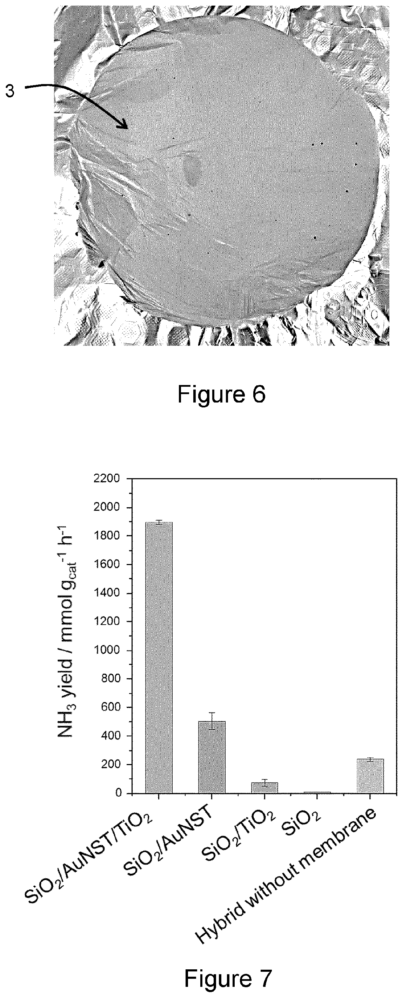

Additionally, the plasmonic photocatalytic membrane (3) comprises a plurality of nano- or micro-fibres of at least one synthetic polymer, wherein said nano- or micro-fibres comprise a plurality of nano- or micro-particle assemblies (5), preferably nanoparticle assemblies (5), embedded within them, each of said nano- or micro assemblies comprising: optionally, one or more nano- or micro-particles of an insulating material (51) or one or more nano- or micro-particles of a first semiconductor material, preferably said semiconductor material comprising or made of a metal-organic framework (MOF),; one or more plasmonic metallic nano- or micro-particles (52), preferably plasmonic metallic nanoparticles (52); and one or more nano- or micro-particles (53) of a second semiconductor material, preferably semiconductor nanoparticles (53), or one or more metal ions (53). It is noted that the absorption of the light photon for the photocatalytic effect in some embodiments happens thanks to the one or more nano- or micro-particles of a second semiconductor material, whereas in some other embodiments it may happen thanks to the one or more metal ions (53), and in some other embodiments it may happen due to a combination of both. Also, since the contribution to the synergistic photocatalytic effect of the one or more nano- or micro-particles of an insulating material is more limited or reduce than the other elements of the nano or micro-particle assemblies (5), i.e., the one or more plasmonic metallic nano- or micro-particles (52); and the one or more nano- or micro-particles of a second semiconductor material and/or one or more metal ions (53), in some embodiments it may not be comprised the one or more nano- or micro-particles of an insulating material (51) in the nano- or micro-particle assemblies (5). Additionally, as shown in figure 7, the embedding of the assemblies (5) inside the membrane (3) fibres has a further synergistic effect that contributes to the photocatalytic effect, thus the assemblies (5) in some embodiments may be supported directly by said isolating fibres.

The reaction chamber (2) is configured to allow the continuous flow of reactants, such as CO₂, N₂, and/or water, from the at least one inlet port (21) towards the at least one outlet port (22) through the membrane (3). This allows the reactants to be consistently introduced to the photocatalytic surface, while the reaction products can efficiently exit the system, maintaining a high throughput and reducing the potential for product build-up, which could interfere with reaction efficiency. This continuous flow configuration is of great importance for large-scale industrial applications where consistent performance is needed over extended operational periods. In some embodiments, the reactor (1) may be configured to operate under conditions that optimize the residence time of reactants within the chamber (2), allowing for better interaction with the plasmonic photocatalytic membrane (3). It is noted that in some embodiments the reaction parameters, such as flow rate and temperature, are controlled according to the reaction of interest. In some embodiments, the reaction chamber (2) may also be equipped with internal flow distributors, branching structures, pipe diameter extensors or reductors for using Bernoulli principles to regulate flow, volume and velocity, or baffles to ensure that the reactants are uniformly exposed to the membrane (3) or are exposed at the desired proportions.

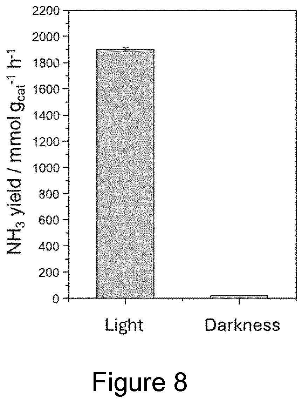

The reaction chamber (2) also comprises means for illuminating and/or allowing light access (4) to the membrane (3). These means (4) play a fundamental role as the photocatalytic reactions depend greatly on light activation, as shown in Figure 8. In some embodiments, the means for illuminating (4) may comprise a light source such as UV, visible, and/or near-infrared light emitters, and they may consist of or comprise LEDs, lasers, or solar concentrators. Alternatively, the light access (4) may be facilitated by one or more windows or transparent sections integrated into the reactor (1) to allow external light to reach the membrane (3) inside the chamber (2). In some embodiments, the light source or window may be directly integrated within the reaction chamber (2). In some embodiments, the window shape, size and/or materials may promote light to be evenly distributed across the surface of the membrane (3) to maximize the efficiency of the photocatalytic process, such as for example by comprising optical elements, collimators, light diffusers, refractive elements, anti-glare treatments or layers, concentrators and/or lenses, as well as means for automatically cleaning said window or optical elements. Alternatively or additionally, light guides or mirrors may be used to direct light more efficiently onto the membrane, further optimizing the photocatalytic performance.

The means for illuminating (4) in some embodiments may be designed to provide a specific wavelength or range of wavelengths, tailored to match the absorption characteristics of the plasmonic photocatalytic membrane (3). This facilitates the membrane (3) to be optimally excited, maximizing the generation of reactive species and enhancing the photocatalytic activity.

The plasmonic photocatalytic membrane (3) comprises a plurality of nano- or micro-fibres made of at least one natural or synthetic polymer, preferably synthetic polymer. These fibres can be understood as serving the purpose, among others, of a supporting matrix for the embedded nano- or micro-particle assemblies (5), which are critical for the photocatalytic activity of the membrane (3), preventing their loss, displacement or damage, as well as distributing them in a planar configuration, preferably perpendicular to the incident light. The synthetic polymer may comprise materials such as, but not limited to, polyamide, polycarbonate, polypropylene, polytetrafluoroethylene (PTFE), polyvinylidene fluoride (PVDF), or any other suitable polymer that is stable under the reaction conditions. Alternatively, a natural polymer may be used in place of a synthetic polymer. Suitable natural polymers may include, but are not limited to, cellulose, chitosan, alginate, collagen, or any other biopolymer that possesses suitable mechanical properties and stability under the reaction conditions. These natural polymers may be biodegradable and/or may offer advantages in terms of environmental sustainability while maintaining the structural integrity required for the membrane (3) in the reactor (1). The selection of a polymer, whether synthetic or natural, could be based on factors such as the interaction with light and the nano- or micro-particle assemblies (5), its contribution to the photocatalytic effect, such as helping increasing the surface area or the absorption cross section and/or helping separating charges, on the reaction temperature needed, the chemical nature of the reactants and products, and/or the required mechanical strength of the membrane.

The diameter of the nano- or micro-fibres may vary from a few nanometers to several microns, depending on the desired surface area and mechanical properties of the membrane. For example, the diameter of the nano- or micro-fibres may be between 1 nm and 50 micrometres, preferably between 10 nm and 1 micrometer, preferably between 50 nm and 500 nm. The fibres are thus arranged forming a porous structure, which allows gases and liquids, such as, but not limited to, CO₂, N₂, and water, to penetrate and react when surrounding the embedded photocatalytic nanoparticle assemblies (5). The membrane's porosity allows the reactants to be adequately exposed to the photocatalytic active sites, optimizing the efficiency of the reaction. This structure also enhances the light interaction with the nanoparticles, as it creates a larger surface area for light absorption.

The fibres are preferably electrospun to achieve high porosity and structural integrity, allowing the nanoparticles to be evenly distributed and remain suspended within the membrane. The use of synthetic polymers in some embodiments, such as polyvinylidene fluoride (PVDF) or polyethylene, may be advantageous because of their chemical resistance and stability under reaction conditions. The electrospinning technique also allows for the fabrication of membranes with highly controlled porosity, further enhancing the flow of reactants and the efficiency of the photocatalytic process. It is noted that the polymer fibres are designed to hold the nanoparticle assemblies in place, preventing aggregation and ensuring uniform catalytic activity across the membrane surface. In some embodiments, the polymer fibres may be functionalized to enhance their interaction with the nanoparticles or to improve other properties such as light absorption, mechanical strength, or chemical stability.

In some embodiments, the nano- or micro-particle assemblies (5) embedded within the fibres may comprise several components, such as one or more first semiconductor or insulating material nanoparticles (51), one or more plasmonic metallic nanoparticles (52), and one or more second semiconductor nanoparticles (53) or metal ions (53), preferably comprising at least one or more plasmonic metallic nanoparticles (52) and one or more second semiconductor nanoparticles (53) or metal ions (53), more preferably comprising additionally one or more insulating material nanoparticles (51) or first semiconductor nanoparticles (51), or one or more nano- or micro-particles of a MOF. The insulating material nanoparticles (51), such as silica, alumina, or polymeric particles, are primarily included to provide mechanical support for the assembly and enhance the dispersion of the active components within the membrane. These nanoparticles do not contribute by themselves substantially to the photocatalytic activity, as can be observed in figure 7, but help maintain the structural integrity of the membrane (3). In some embodiments, thus, the insulating material may be omitted, and, for example, the polymeric fibres themselves may serve as the support for the nanoparticle assemblies (5). In some other embodiments, the supporting role of the insulating material nanoparticles (51) may come from a semiconductor micro- or nano-particle, such as a MOF, preferably MOFs of the UiO, MIL or ZIF families, or instead COFs or porous materials or metamaterials, as well as MOPs, molecular cages and/or aerogels. These second semiconductor nanoparticles (53) may vary in size from a few nanometres to several microns, preferably may range between 10 nm and 250 microns, more preferably between 50 nm and 10 micron, even more preferably between 100 nm and 1 micron, and may be synthesized in various shapes, including spherical, stars, rod-like, or irregular shapes, to tailor the optical properties of the nanoparticle assembly.

The plasmonic metallic nanoparticles (52) are preferably composed of metals such as gold, silver, copper, platinum, palladium, aluminium or other suitable plasmonic materials. More preferably, the plasmonic metallic nanoparticles (52) are composed of gold due to its strong surface plasmon resonance (SPR) properties, which enable efficient light absorption and the generation of hot electrons. These nanoparticles contribute to the photocatalysis thanks to the localized surface plasmon resonance (LSPR) effect, which enhances light absorption and creates energetic "hot" electrons upon light irradiation. These hot electrons can then be transferred to the second semiconductor nanoparticles (53) or metal ions (53), facilitating the generation of electron-hole pairs necessary for photocatalytic reactions. Therefore, the plasmonic metallic nanoparticles (52) play an important role in the photocatalytic properties of the micro- or nano-particle assemblies (5) by synergistically enhancing the ability of the semiconductor micro- or nano-particles (53) to absorb light, and promoting the use of said absorbed energy to catalyse the chemical reaction of interest. These plasmonic nanoparticles (52) may vary in size from a few nanometres to several microns, preferably may range between 1 nm and 50 microns, more preferably between 10 nm and 1 micron, even more preferably between 20 nm and 300 nm, and may be synthesized in various shapes, including spherical, stars, rod-like, or irregular shapes, to tailor the optical properties of the nanoparticle assembly. The size and shape of the plasmonic nanoparticles may thus be adjusted to tune their plasmonic resonance frequency, thereby optimizing the light absorption depending on the type of reaction and the light source used. Smaller particles may be employed to increase light absorption efficiency, while larger particles could generate more energetic electrons, enhancing the catalytic activity.

The second semiconductor nanoparticles (53) may include materials such as, but not limited to, titanium dioxide (TiO₂), zinc oxide (ZnO), tungsten trioxide (WO₃), iron oxide (Fe₂O₃), or other metal oxides. These semiconductor materials are commonly used in photocatalysis due to their ability to promote redox reactions when exposed to light. For example, TiO₂ is a well-known photocatalyst that absorbs UV light and generates electron-hole pairs, which can drive oxidation or reduction reactions. Similarly, ZnO and WO₃ also exhibit photocatalytic activity under UV or visible light, depending on their bandgap and doping. Alternatively, the second semiconductor nanoparticles (53) may include hybrid materials, such as carbon-based semiconductors or organic-inorganic composites, to further improve the photocatalytic activity by shifting the absorption spectrum into the visible light range. These second semiconductor nanoparticles (53) may vary in size from a few nanometres to several microns, preferably may range between 1 nm and 50 microns, more preferably between 10 nm and 1 micron, even more preferably between 20 nm and 300 nm, and may be synthesized in various shapes, including spherical, stars, rod-like, or irregular shapes, to tailor the optical properties of the nanoparticle assembly.

It is noted that additionally or alternatively to the embodiments above mentioned, in some embodiments the micro- or nano-particle assemblies (5) may comprise one or more nano- or micro-particles of an insulating material (51) or one or more of the following:
- nano- or micro-particles of a semiconductor material
- nano- or micro-particles of a metal-organic framework (MOF), preferably a UiO-family variant, a MIL-type framework or a ZIF-type framework
- nano- or micro-particles of a covalent-organic framework (COF), preferably a 2D COF or a 3D COF
- Porous Silicon and Porous Semiconductor Matrices
- Mesoporous and Microporous Oxides
- Hybrid Polymer Systems
- Nanocellulose and Bio-based Porous Matrices
- Metal-Organic Polyhedra (MOPs) and/or Molecular Cages
- Composite Aerogels and Hydrogels

Wherein preferably the micro- or nano-particle assemblies (5) may comprise one or more nano- or micro-particles of an insulating material (51) or one or more of the following:
- nano- or micro-particles of a metal-organic framework (MOF), preferably a UiO-family variant, a MIL-type framework or a ZIF-type framework
- nano- or micro-particles of a covalent-organic framework (COF), preferably a 2D COF or a 3D COF

More preferably the micro- or nano-particle assemblies (5) may comprise one or more nano-or micro-particles of an insulating material (51) or one or more of the following:
- nano- or micro-particles of a metal-organic framework (MOF), preferably a UiO-family variant, a MIL-type framework or a ZIF-type framework, more preferably a UiO-family variant.

Therefore, in some of the embodiments, instead of the one or more nano- or micro-particles of an insulating material (51) it may be comprised any of the particles above mentioned or any combination thereof, preferably one or more nano- or micro-particles of a metal-organic framework (MOF).

In some other embodiments, the supporting role of the insulating material nanoparticles (51) may thus come from a semiconductor material nanoparticle, or from other micro- or nano-particles, such as a MOF, preferably MOFs of the UiO, MIL or ZIF families, or COFs, porous materials or metamaterials, as well as MOPs, molecular cages and/or aerogels.

It is noted that metal-organic framework (MOF) may, for example, or additionally to other functionality or electronic or optical property, serve as porous scaffolds or support matrices that can stabilize and organize the spatial arrangement of other functional particles, such as semiconductor or plasmonic nanoparticles. It is further noted that metal-organic frameworks (MOFs) are crystalline materials composed of metal ions or clusters coordinated to organic ligands, forming porous, often highly ordered three-dimensional structures. MOFs may comprise insulating or semiconductor properties, wherein preferably are employed semiconductor MOFs in the embodiments of this invention, but some embodiments are not limited to semiconductor and instead may be insulating. These materials, among other properties, offer high surface areas, tuneable pore sizes, and chemical versatility, making them especially suitable for applications in photocatalysis, sensing, and photonics. Preferably, the MOFs comprise families such as, but not limited to, the UiO-series, MIL-series, and ZIF-series, more preferably from the UiO family. The term UiO refers to "University of Oslo," the institution where this series of MOFs was first developed; UiO MOFs typically feature zirconium-based nodes and exhibit exceptional thermal and chemical stability. The UiO MOFs may comprise include, but are not limited to, UiO-66, UiO-67, and/or their functionalized derivatives, such as UiO-66-NH₂ or UiO-67-bipyridine, preferably UiO-67-bipyridine, which incorporate nitrogen-containing moieties, which are for example suitable for coordinating additional metal ions or nanoparticles. On the other hand, MIL refers to "Materials of Institut Lavoisier," a family of MOFs based on metals such as iron, chromium, or titanium, such as, but not limited to, MIL-101 and MIL-125 are representative examples, with MIL-125(Ti) in particular offering photocatalytically active titanium centers. The ZIF family (Zeolitic Imidazolate Frameworks) is another class of MOFs structurally analogous to zeolites, often based on zinc or cobalt and imidazolate linkers. The ZIF MOFs may comprise, but are not limited to, ZIF-8 and ZIF-67. These MOFs may be used individually or in combination, and may be synthesized as discrete particles, coatings, or films.

In some embodiments, the micro- or nano-particle assemblies (5) may comprise, alternatively or additionally to one or more nano- or micro-particles of an insulating material (51), nano- or micro-particles comprising covalent organic frameworks (COFs), which are porous, crystalline materials that may be constructed from light elements (such as carbon, boron, nitrogen, and oxygen) linked via strong covalent bonds. Examples comprise, but are not limited to, 2D COFs such as TPB-DMTP (constructed from 1,3,5-tris(4-formylphenyl)benzene and 2,5-dimethoxyterephthalohydrazide) or TAPB-PDA (made from 1,3,5-tris(4-aminophenyl)benzene and terephthalaldehyde), as well as 3D COFs like COF-300.

In some embodiments, the micro- or nano-particle assemblies (5) may comprise, alternatively or additionally to one or more nano- or micro-particles of an insulating material (51), nano- or micro-particles comprising one or more metal-organic polyhedra (MOPs) or molecular cages. MOPs are discrete, nanoscale assemblies composed of metal ions and organic ligands forming well-defined polyhedral structures, as opposed to extended frameworks. MOPs may comprise, but are not limited to, palladium-based coordination cages such as [Pd₂L₄]⁴⁺ systems, where L represents a bidentate or tridentate organic ligand capable of forming square-planar coordination with Pd(II) centers; copper-based MOPs such as Cu₂₄(L)₂₄ cages, where L is often a carboxylate or pyridyl-based ligand forming polyhedral clusters with well-defined windows and cavities; M₆L₄-type octahedral cages based on metals such as ruthenium or platinum; and iron-based tetrahedral MOPs assembled from Fe(II) centers and tris(imidazolyl) ligands. Molecular cages may include purely organic cages such as imine-linked porous organic cages (POCs), including CC3, CC13, and CC21, as well as cages formed by dynamic covalent chemistry such as boronate ester-linked or disulfide-linked cages In some embodiments, the assemblies (5) may comprise, alternatively or additionally to one or more nano- or micro-particles of an insulating material (51), nano- or micro-particles comprising other types of porous or structured materials that are capable of hosting semiconductor or plasmonic nanoparticles. These may include, but are not limited to, mesoporous or microporous oxides such as mesoporous silica (e.g., SBA-15, MCM-41), mesoporous titania or alumina, or zeolites with well-defined microporous channels. Alternatively, the complexes may include porous semiconductor matrices such as porous silicon, which offers both electronic functionality and nanoscale porosity. In some embodiments, the support material may comprise a hybrid polymer system, such as block copolymer templates (e.g., PS-b-PMMA), conductive polymers like polyaniline (PANI) or PEDOT:PSS, or bio-derived porous materials including nanocellulose or chitosan-based aerogels.

Alternatively, metal ions (53), such as copper, iron, cobalt, nickel, or other transition metals, may also be used to provide similar photocatalytic effects. These metal ions can act as electron acceptors, facilitating charge transfer processes and promoting redox reactions. For example, copper ions (Cu²⁺) can catalyse the reduction of oxygen to hydrogen peroxide, while iron ions (Fe³⁺/Fe²⁺) can participate in the Fenton reaction, generating hydroxyl radicals that are highly reactive in degradation processes. In some embodiments the metal ions (53) may be incorporated into the semiconductor matrix or embedded directly within the plasmonic nanoparticle assemblies (5) to enhance their photocatalytic performance.

The combination of plasmonic metallic nanoparticles (52) and second semiconductor nanoparticles and/or metal ions (53) in the nanoparticle assemblies (5) allows for enhanced light absorption, efficient charge separation, and improved photocatalytic performance compared to separate systems.

It is further noted that the light absorption function in the reactor (1) may be realized by the second semiconductor nanoparticles and/or the metal ions (53). The second semiconductor nanoparticles (53) have the ability to absorb light and generate electron-hole pairs when exposed to photons with energy equal or greater than their bandgap. These electron-hole pairs are essential for photocatalytic reactions, as the electrons may reduce the target molecules, while the holes may oxidize other reactants. Semiconductor materials like TiO₂, ZnO, or WO₃ typically absorb ultraviolet (UV) light, although modifications such as doping or compositing with other materials may shift the absorption to the visible spectrum, making the system more efficient under natural sunlight. In some embodiments, the semiconductor materials may be doped with metal ions or other materials to improve their photocatalytic activity. For instance, doping titanium dioxide with platinum or palladium can enhance its ability to drive reactions such as hydrogen production or nitrogen fixation.

On the other hand, the plasmonic metallic nanoparticles (52) primarily enhance light absorption through surface plasmon resonance (SPR). The plasmonic nanoparticles (52) have the ability to oscillate at specific frequencies when illuminated with light of matching wavelength, generating highly energetic electrons (also known as hot electrons). These hot electrons can be transferred to the second semiconductor nanoparticles (53) or metal ions (53), where they participate in the photocatalytic reactions. The combination of plasmonic nanoparticles and semiconductor materials in a single membrane provides a synergistic effect, maximizing light absorption, charge separation, and electron transfer processes, resulting in high catalytic efficiency, wherein the plasmonic nanoparticles (52) enhance light absorption and electron generation, while the second semiconductor nanoparticles (53) or metal ions (53) efficiently use the generated electrons for redox reactions. This cooperation leads to a more effective and energy-efficient photocatalytic process compared to systems that rely on either plasmonic or semiconductor materials alone.

It is noted that the plasmonic metallic nanoparticles (52) and/or the second semiconductor nanoparticles and/or the metal ions (53) are preferably attached to the surface of the one or more insulating material nanoparticles (51), wherein said first semiconductor or insulating material nanoparticles (51) are preferably silicon dioxide nano or microparticles. It is noted that in some embodiments at least some of the plasmonic metallic nanoparticles (52) may be attached to the second semiconductor nanoparticles (53) in addition to or instead of to the insulating material nanoparticles (51). Preferably wherein the plasmonic metallic nanoparticles (52) are gold nanoparticles. Preferably wherein the second semiconductor nanoparticles (53) are titanium dioxide nano- or micro-particles. Preferably wherein the metal ions (53) are copper ions, such as Cu²⁺, Cu⁺ and/or Cu⁰.

Advantageously, the integration of the nanoparticle assemblies (5) within the polymeric fibres of the plasmonic photocatalytic membrane (3) provides several key advantages. First, this configuration maximizes the surface area available for light absorption, as the membrane's porous structure allows for optimal interaction between the light and the nanoparticle assemblies (5). The fibre structure also facilitates efficient mass transport of reactants to the active photocatalytic sites, ensuring that the reactions occur at a high rate and yield. The embedded nanoparticle assemblies (5) provide enhanced photocatalytic performance due to the synergetic interaction between the plasmonic metallic nanoparticles (52), the second semiconductor nanoparticles and/or metal ions (53), and the insulating material nanoparticles (51) or the polymeric fibres themselves. This synergetic effect results in a much higher photocatalytic yield compared to individual components, making the system highly effective for large-scale production of chemicals such as ammonia and methanol, but also other valuable products.

Moreover, the continuous flow design of the reactor (1) ensures that reactants can be constantly replenished, and products can be efficiently removed, which enhances the scalability of the system and optimally exploit the photocatalytic properties of the membrane (3). Continuous flow operation is particularly advantageous in industrial settings, where high throughput and consistent performance are required. The configuration allows for a constant feed of reactants, preventing the stagnation of chemicals inside the reactor, which could hinder the reaction efficiency. By continuously introducing fresh reactants into the reaction chamber, the system maintains optimal reaction conditions, with products being consistently removed from the reactor. The reactor's design and the integration of the plasmonic photocatalytic membrane (3) also allow for operation under ambient conditions, using renewable energy sources such as sunlight, making the system economically viable and environmentally sustainable. This novel invention addresses several challenges associated with conventional photocatalytic systems, such as limited scalability, rapid charge recombination, and poor long-term stability, offering a significant advancement in the field of photocatalysis for industrial applications

According to a preferred embodiment of the invention, the photocatalytic flux reactor (1) comprises one or more plasmonic photocatalytic metallic nano- or micro-particles (52) consisting of or comprising gold (Au), silver (Ag), cupper (Cu), platinum (Pt), palladium (Pd), aluminium (Al), nickel (Ni), zinc (Zn) and/or titanium (Ti) in their composition or any combination or alloy thereof. Preferably the one or more plasmonic photocatalytic metallic nano- or micro-particles (52) comprise or consist of gold nanoparticles, more preferably gold nano-stars. Additionally, or alternatively, in some embodiments the photocatalytic flux reactor (1) of the invention comprises one or more second semiconductor nano- or micro-particles (53) consisting of or comprising titanium dioxide in their composition. Optionally, in some embodiments, the one or more nano- or micro-particles of an insulating material (51) are silicon dioxide nano- or micro-particles.

It is noted that said plasmonic metallic nano- or micro-particles (52) may be synthesized in various shapes and sizes, with different geometries leading to distinct plasmonic properties, such as, for example, nano-stars. Nano-stars are particularly advantageous due to their highly anisotropic structure, which leads to enhanced plasmonic activity by increasing the surface area and allowing for multiple plasmonic modes. This geometry can optimize their capacity to absorb and scatter light efficiently, especially in the near-infrared region, where solar energy is more abundant. Preferably, these particles comprise or consist of gold nanoparticles, more preferably gold nano-stars. Gold nano-stars also exhibit strong stability under various reaction conditions, preventing degradation or loss of activity over extendedn operational periods.

Alternatively, the plasmonic metallic nanoparticles (52) may comprise other noble or transition metals with strong plasmonic responses, such as, for example, Silver (Ag) which is a highly efficient plasmonic material with high light absorption in the visible spectrum. However, Ag nanoparticles are more prone to oxidation and may require additional stabilizing agents or protective coatings. In some embodiments plasmonic metallic nanoparticles (52) may comprise or consists of Copper (Cu), as it exhibits strong plasmonic effects similar to Ag, with a lower cost, making it an attractive option for large-scale industrial applications. Furthermore, Cu nanoparticles can be alloyed with Au or Ag to enhance stability while maintaining strong plasmonic activity.

In some embodiments, the plasmonic nanoparticles (52) may comprise or consists of platinum (Pt) and/or palladium (Pd). Pt and Pd present also catalytic properties that can complement the photocatalytic reactions, especially in cases where hydrogen evolution or oxidation processes are involved. Aluminium (Al) nanoparticles may also be utilized in some embodiments, as Al exhibits plasmonic properties in the ultraviolet (UV) spectrum, making it suitable for applications where UV-activated photocatalysis is preferred. Other metals such as nickel (Ni), zinc (Zn), and titanium (Ti) may be employed individually or in combination to optimize the optical and catalytic properties of the nanoparticles.

It is also mentioned that in some embodiments, core-shell structures may be utilized to enhance the plasmonic and catalytic performance of the nanoparticles. For example, Au@Ag core-shell nanoparticles, which consist of a gold core and a silver shell, may be employed to combine the stability of gold with the superior plasmonic efficiency of silver. Similarly, Au@Cu core-shell nanoparticles may provide a cost-effective alternative while retaining strong plasmonic activity. Other core-shell configurations may include Pt-coated Au nanoparticles or Pd-coated Ag nanoparticles, which provide a catalytic functionality best suited to certain applications.

Additionally or alternatively, in some embodiments, the photocatalytic flux reactor (1) of the invention may comprise one or more second semiconductor nano- or micro-particles (53) consisting of or comprising titanium dioxide in their composition. Titanium dioxide (TiO₂) is a well-established semiconductor material widely used in photocatalysis due to its high stability, non-toxicity, and strong ability to generate electron-hole pairs upon UV light absorption. TiO₂ may exist in different crystalline phases, including anatase, rutile, and brookite, preferably in the anatase phase due to its superior charge separation efficiency and higher reactivity.

Alternatively, other semiconductor materials may be used instead of or in combination with TiO₂, such as, for example, to expand the operational wavelength range of the system and enhance its efficiency, or as more cost-effective alternative. In some embodiments, alternative semiconductor materials such as zinc oxide (ZnO), tungsten trioxide (WO₃), iron oxide (Fe₂O₃), and transition metal dichalcogenides (TMDCs) such as molybdenum disulfide (MoS₂) and tungsten disulfide (WS₂) may be employed. TMDCs are particularly interesting due to their unique electronic properties, including strong light absorption in the visible and near-infrared spectrum, making them valuable candidates for improving the performance of the photocatalytic system under solar illumination, for example by combining with second semiconductor nanoparticles (53) inside the same nano- or micro-particle assembly (5) or combining with other nano- or micro-particle assemblies (5) with absorptions in the ultra-violet range of the spectrum. Therefore, different materials and particles may be combined, according to any of the embodiments above-mentioned, inside each of the plurality of nano-or micro-particle assemblies (5), or different nano- or micro-particle assemblies (5) may be manufactured with different semiconductor (53) and/or plasmonic (52) particles, and then added in any preferred relative proportion to the photocatalytic membrane (3), preferably added to the electrospninning medium (31) to be comprised inside the fibres of the membrane (3) by this method.

In some embodiments, the second semiconductor nanoparticles (53) may also be modified through doping or compositing strategies to optimize their performance. For example, TiO₂ may be doped with elements such as nitrogen (N), sulphur (S), or carbon (C) to extend its light absorption range into the visible spectrum. Similarly, hybrid semiconductor systems combining TiO₂ with carbon-based materials such as graphene or graphitic carbon nitride (g-C₃N₄) may enhance charge separation and improve photocatalytic efficiency.

Optionally, in some embodiments, one or more nano- or micro-particles of an insulating material (51) or one or more nano- or micro-particles of a semiconductor material, such as one or more nano- or micro-particles of a metal-organic framework (MOF), are comprised in the membrane (3) of the reactor (1) of the invention, preferably wherein said nano- or micro-particles comprise or consists of silicon dioxide (SiO₂). It is noted that these nano- or micro-particles serve preferably as a structural support material, ensuring the uniform dispersion of the active photocatalytic components within the membrane (3) and providing mechanical stability to the reactor system. In some embodiments, SiO₂ may also function as a spacer layer, preventing the direct aggregation of plasmonic and second semiconductor nanoparticles (52, 53), which could otherwise reduce the photocatalytic efficiency. Alternatively, in some embodiments other insulating materials such as aluminum oxide (Al₂O₃), magnesium oxide (MgO), or boron nitride (BN) may be employed to provide similar structural and dispersion benefits. In some other embodiments, the supporting role of the insulating material nanoparticles (51) may come from a semiconductor micro- or nano-particles, such as a MOF, preferably MOFs of the UiO, MIL or ZIF families, or instead COFs or porous materials or metamaterials, as well as MOPs, molecular cages and/or aerogels

Advantageously, tuning the composition of the plasmonic metallic nano- or micro-particles (52), second semiconductor nano- or micro-particles (53), and insulating nano- or micro-particles (51) in the photocatalytic flux reactor (1) offers a versatile and highly efficient approach to photocatalytic chemical production, allowing to tune the plasmonic properties, optimizing light absorption in specific wavelength ranges and improving charge transfer efficiency. In particular, as is demonstrated in Figure 7, the selection of silicon dioxide as insulating nano- or micro-particles (51), gold nanostars as plasmonic metallic nano- or micro-particles (52), and titanium dioxide as nano- or micro-particles, provides an exceptional and unexpected high yield efficiency in the production of ammonia from nitrogen and water, with the membrane (3) under light. The alternatives described herein provide a highly scalable, sustainable, and economically viable photocatalytic system that can be adapted for various industrial applications, including but not limited to, the production of ammonia, methanol, and other valuable chemicals under ambient conditions.

According to a preferred embodiment of the reactor (1) invention, the nano- or micro-particle assemblies (5) comprise as plasmonic photocatalytic metallic nano- or micro-particles (52) gold nano- or micro-particles, preferably gold nanospheres. Preferably, or alternatively, the nano- or micro-particle assemblies (5) comprise copper ions (such as Cu²⁺, Cu⁺ and/or Cu⁰) as metal ions (53). Optionally, the nano- or micro-particle assemblies (5) comprise nano- or micro-particles of a metal-organic framework (MOF), preferably UiO-67-bipyridine, for example in addition or instead of nano- or micro-particles of an insulating material (51).

It is noted that gold nanospheres are particularly advantageous due to their well-defined optical properties, ease of synthesis, and high stability under reaction conditions. Their spherical shape provides uniform plasmonic activity in all directions, ensuring efficient absorption of light across a broad range of wavelengths. Additionally, their surface may be easily functionalized to enhance charge transfer interactions with adjacent second semiconductor nanoparticles (53) or metal ions (53), further optimizing photocatalytic performance. In some embodiments, the gold nanospheres may be replaced or supplemented with other geometries, such as nanorods, nanostars, nanocages, or hollow nanoparticles, which offer tuneable plasmonic properties and/or additional catalytic functionalities.

Preferably, or alternatively, the nano- or micro-particle assemblies (5) comprise copper ions (such as Cu²⁺, Cu⁺, and/or Cu^{o}) as metal ions (53). Copper ions are particularly useful in photocatalysis due to their redox versatility, allowing them to participate in multiple reaction pathways. Cu²⁺ and Cu⁺ species can act as electron acceptors, facilitating charge transfer from second semiconductor nanoparticles (53) and/or from plasmonic metallic nanoparticles (52), while Cu° may serve as a co-catalyst in certain reduction reactions. Additionally, copper-based materials are cost-effective and abundant compared to noble metals, making them a preferred choice for scalable industrial applications. In some embodiments, the copper ions (53) may be stabilized within a support matrix or bound to a ligand system to enhance their catalytic efficiency and long-term stability.

Optionally, the nano- or micro-particle assemblies (5) comprise nano- or micro-particles of a metal-organic framework (MOF), preferably UiO-67-bipyridine, wherein they can act in addition or instead of the nano- or micro-particles of an insulating material (51). MOFs are highly porous materials composed of metal clusters coordinated with organic ligands, offering high surface areas and tuneable chemical functionalities. UiO-67-bipyridine, in particular, is a zirconium-based MOF that exhibits excellent stability and catalytic adaptability. The incorporation of MOFs as semiconductor or insulating materials (51) provides several advantages: (i) they serve as structural supports for the plasmonic metallic nanoparticles (52) and metal ions (53) and/or second semiconductor nanoparticles (53), preventing aggregation and ensuring uniform dispersion; (ii) they can enhance reactant adsorption and diffusion due to their high porosity, improving the interaction between the reactants and active sites; and (iii) they may participate in photocatalytic charge transfer processes by acting as electron reservoirs or mediators.

In alternative embodiments, other MOFs may be used in place of or in combination with UiO-67-bipyridine, depending on the desired photocatalytic properties. Some alternatives include, but are not limited to, MIL-101, HKUST-1, ZIF-8, and UiO-66, each of which offering different porosity levels, metal centers, and electronic properties that may be tailored for specific photocatalytic reactions. Additionally, hybrid materials combining MOFs with other insulating materials, such as SiO₂ or Al₂O₃, may be used in some embodiments to enhance mechanical stability and optimize photocatalytic performance.

Advantageously, the use of gold nanospheres as plasmonic metallic nanoparticles (52) ensures efficient light absorption and charge transfer, while copper ions (53) provide redox-active sites that can enhance the overall photocatalytic reaction kinetics. The incorporation of MOFs as insulating materials (51) further improves the stability and functionality of the nanoparticle assemblies (5), allowing for precise control over reactant diffusion and charge separation. This combination results in a highly efficient and scalable photocatalytic system, capable of operating under ambient conditions while maintaining high chemical yields for ammonia, methanol, and other industrially relevant products.

According to certain embodiments of the invention, the synthetic polymer of the membrane (3) comprises or consists of polyvinyl alcohol, polycaprolactone, polyethylene oxide, polyacrylonitrile, polylactic acid, polystyrene, polyvinylpyrrolidone, polyethylene terephthalate, polymethyl methacrylate, polyurethane, and/or nylon-6, preferably polyvinyl alcohol.

It is noted that, according to certain embodiments of the invention, the synthetic polymer of the membrane (3) comprises or consists of polyvinyl alcohol (PVA), polycaprolactone (PCL), polyethylene oxide (PEO), polyacrylonitrile (PAN), polylactic acid (PLA), polystyrene (PS), polyvinylpyrrolidone (PVP), polyethylene terephthalate (PET), polymethyl methacrylate (PMMA), polyurethane (PU), and/or nylon-6, preferably polyvinyl alcohol (PVA). It is noted that different polymers offer different stability, mechanical strength, and compatibility with electrospinning or other fibre-forming techniques, allowing fine-tuning the fabrication of a porous, structurally stable membrane (3) capable of supporting the embedded nano- or micro-particle assemblies (5).

Preferably, the synthetic polymer of the membrane (3) comprises or consists of Polyvinyl alcohol (PVA due to its excellent film-forming ability, water solubility, and biocompatibility. PVA can be processed into highly porous nanofiber networks, facilitating the diffusion of reactants through the membrane (3) while maintaining structural integrity. Furthermore, its hydroxyl (-OH) functional groups can provide strong interactions with the embedded nanoparticles, enhancing their dispersion and stability. In some embodiments, PVA may be crosslinked to improve its mechanical properties and resistance to dissolution in aqueous environments, ensuring long-term stability during photocatalytic reactions.

Alternatively, polycaprolactone (PCL) may be used as a biodegradable polymer with good mechanical flexibility, making it suitable for applications requiring membrane durability. Polyethylene oxide (PEO) and polyvinylpyrrolidone (PVP) are hydrophilic polymers that enhance the wettability of the membrane (3), facilitating reactant absorption and interaction with the photocatalytic nanoparticles. Polylactic acid (PLA) and polyethylene terephthalate (PET) may be used in some embodiments due to their high chemical resistance and thermal stability. Additionally, polymethyl methacrylate (PMMA) and polystyrene (PS) offer good optical transparency, which may be advantageous in some embodiments where more light penetration through the membrane (3) is desirable, such as for stacking membranes (3) or, for example, for using thicker membranes (3). Polyacrylonitrile (PAN) and polyurethane (PU) may be selected in some embodiments for their mechanical robustness and chemical resistance. Nylon-6 may also be employed, as it provides strong mechanical support and resistance to degradation.

In some embodiments, blends or copolymers of these materials may be used to achieve tailored membrane properties, such as optimal porosity, mechanical flexibility, and compatibility with the photocatalytic nano- or micro-particle assemblies (5). The polymer selection may also be adjusted based on the target photocatalytic reactions, ensuring compatibility with the reactants and reaction environment.

It is further noted that, in alternative embodiments, the polymer of the membrane (3) comprises or consists of a natural polymer. Suitable natural polymers may include, but are not limited to, cellulose, chitosan, alginate, collagen, silk fibroin, gelatine, starch, dextran, xanthan gum, casein, and/or lignin, as long as they offer a suitable support to host the nano- or micro-particle assemblies (5), preferably inside their fibres. These materials offer several advantages, such as, but not limited to, biodegradability, biocompatibility, and/or environmental sustainability, while still maintaining structural and functional properties necessary for the membrane (3).

Cellulose and its derivatives, such as cellulose acetate and carboxymethyl cellulose, may be employed in some embodiments due to their strong mechanical properties, high porosity, and good compatibility with nanoparticle embedding. Chitosan, derived from chitin, may be employed in alternative embodiments due to its antimicrobial activity and strong adsorption capabilities, which may aid in capturing reactants at the membrane surface. Alginate, a polysaccharide extracted from algae, may be employed in certain embodiments due to its ability to form hydrogels and porous structures.

In some embodiments, natural polymers may be chemically modified to improve their mechanical properties, hydrophobicity, or compatibility with the embedded nano- or micro-particle assemblies (5). Blends of natural and synthetic polymers may also be employed to achieve an optimized balance of biodegradability, mechanical strength, and photocatalytic efficiency. The selection of a natural polymer is dependent on the intended operating conditions of the reactor (1), ensuring that the membrane (3) maintains its structural integrity while facilitating efficient photocatalytic reactions.

Advantageously, the use of synthetic or natural polymers in the membrane (3) provides flexibility in tailoring the reactor (1) for different applications. Synthetic polymers offer well-defined mechanical properties, chemical resistance, and processing ease, making them suitable for large-scale industrial applications. Particularly, PVA offers an excellent support for the nano- or micro-particle assemblies (5), and its presence may contribute to the overall photocatalytic effect, as demonstrated in Figure 7. Natural polymers, on the other hand, may provide sustainable and biodegradable alternatives, which may be beneficial for environmentally friendly photocatalytic systems.

In a preferred embodiment of the flux reactor (1) of the invention, the plasmonic photocatalytic membrane (3) is configured to facilitate a chemical reaction, preferably a redox reaction, between water as a reducing agent, and an oxidizing agent, yielding a final product and oxygen.

The reaction facilitated by the membrane (3) is preferably based on the principle of photocatalytic redox processes, wherein light absorption by the plasmonic photocatalytic nano-or micro-particles (52) and second semiconductor nano- or micro-particles (53) generates charge carriers-electrons and holes-that drive the chemical transformation. Water molecules act as a reducing agent, meaning they provide electrons to the reaction system, while the oxidizing agent accepts these electrons, leading to the formation of a final product.

In some embodiments, the oxidizing agent may be carbon dioxide (CO₂), in which case the reaction leads to the formation of valuable carbon-based products such as methanol (CH₃OH), formaldehyde (HCHO), and/or formic acid (HCOOH), preferably methanol. This reaction pathway represents a sustainable approach to CO₂ utilization, as it converts a greenhouse gas into useful chemicals or fuels using only light energy and water as reactants.

Alternatively, in some embodiments the oxidizing agent may be nitrogen (N₂), enabling the photocatalytic synthesis of ammonia (NH₃) through a nitrogen reduction reaction (NRR). In this scenario, water serves as the proton source, while the electrons generated by the photocatalytic process facilitate the activation and reduction of nitrogen molecules. The production of ammonia via this method offers a sustainable alternative to the traditional Haber-Bosch process, which is highly energy-intensive and reliant on fossil fuels.

In other embodiments, the oxidizing agent may be oxygen-containing compounds such as nitrate (NO₃⁻), nitrite (NO₂⁻), or sulfate (SO₄²⁻), which undergo photocatalytic reduction to produce nitrogen-based or sulphur-based products. For example, nitrate reduction may yield ammonia or nitrogen gas (N₂), while sulphate reduction may result in the formation of sulphide (S²⁻), which has industrial applications.

The membrane (3) may be optimized to enhance the efficiency of these redox reactions by modifying the composition and structure of the embedded nano- or micro-particle assemblies (5). In some embodiments, co-catalysts such as ruthenium (Ru), cobalt (Co), or molybdenum (Mo) may be integrated into the nano- or micro-particle assemblies (5) to further improve charge separation and enhance catalytic activity.

Advantageously, the configuration of the plasmonic photocatalytic membrane (3) to facilitate redox reactions using water as a reducing agent provides a highly sustainable approach to chemical production. This system eliminates the need for sacrificial reagents, reducing operational costs and minimizing waste generation. The ability to convert abundant and renewable feedstocks such as CO₂, N₂, and water into valuable chemicals offers significant environmental and economic benefits. This photocatalytic process presents a viable pathway for green chemistry applications, enabling sustainable fuel and chemical synthesis under ambient conditions.

According to a preferred embodiment of the invention, the photocatalytic flux reactor (1) of the invention comprises at least two inlet ports (21), of which at least one is a liquid inlet port (211), preferably for water, liquid or gaseous, and at least one is a gas inlet port (212), preferably for N₂, CO₂, or air, although said gases may also be provided in their liquid state in some embodiments.

It is noted that, according to a preferred embodiment of the invention, the photocatalytic flux reactor (1) comprises at least two inlet ports (21), of which at least one is a liquid inlet port (211), preferably for water, in either liquid or gaseous form, and at least one is a gas inlet port (212), preferably for N₂, CO₂, or air. In some embodiments, these gases may also be provided in their liquid state, depending on the specific operating conditions of the reactor (1) and the reaction requirements.

The inclusion of at least two inlet ports (21) ensures that the reactor (1) can efficiently introduce reactants in different phases, optimizing their interaction with the plasmonic photocatalytic membrane (3). The liquid inlet port (211) is particularly relevant for supplying water, which serves as a reducing agent in redox reactions, as well as a solvent or carrier for dissolved reactants. In certain embodiments, the liquid inlet port (211) or an additional one may also be used to introduce other liquid-phase reactants or catalytic additives, such as alcohols, organic acids, or dissolved metal ions that enhance the photocatalytic activity of the nano- or micro-particle assemblies (5).

The gas inlet port (212) is designed to introduce gaseous reactants such as nitrogen (N₂), carbon dioxide (CO₂), or air, which naturally comprises both, which are essential for key photocatalytic reactions. For example, nitrogen gas may be used in nitrogen reduction reactions (NRR) to synthesize ammonia (NH₃), while carbon dioxide may undergo photocatalytic reduction to produce valuable carbon-based products such as methanol, formaldehyde, or other hydrocarbons. The ability to directly introduce air as a reactant expands the versatility of the reactor (1), allowing for oxidation reactions that utilize atmospheric oxygen as an oxidizing agent.

In some embodiments, the gas inlet port (212) may also be configured to introduce reactants in their liquid state, such as liquid CO₂ or cryogenically cooled nitrogen. This can be advantageous in scenarios where high reactant concentrations are required, or where phase control is necessary to optimize reaction kinetics. In such cases, the reactor (1) may incorporate heating or pressure-regulating elements to control the phase transition of these reactants within the reaction chamber (2), ensuring efficient mixing and interaction with the plasmonic photocatalytic membrane (3).

Additionally, in alternative embodiments, the reactor (1) may comprise additional inlet ports (21) beyond the required liquid and gas inlets, allowing for greater flexibility in introducing co-reactants, catalysts, or carrier gases. Multiple gas inlet ports (212) may be included to allow for independent control of different gaseous reactants, optimizing reaction conditions for specific applications. Similarly, additional liquid inlet ports (211) may be provided to introduce different liquid-phase reactants or facilitate multi-step reaction processes within the same reactor (1).

Advantageously, the presence of at least one liquid inlet port (211) and at least one gas inlet port (212) allows for precise control over reactant composition, relative concentrations and flow dynamics, ensuring that the plasmonic photocatalytic membrane (3) is consistently exposed to optimal reaction conditions. This dual-inlet configuration enhances the efficiency of photocatalytic transformations by facilitating direct gas-liquid-solid interactions, improving mass transport of reactants, and preventing diffusion limitations that could otherwise reduce reaction rates.

In a preferred embodiment of the invention, the distal part, or the exit of the gas inlet port (212) is positioned perpendicular to the plasmonic photocatalytic membrane (3), preferably centred relative to the midpoint of said membrane, more preferably located beneath said membrane.

It is noted that, in a preferred embodiment of the invention, the distal part or the exit of the gas inlet port (212) is positioned such that the gas, once introduced, moves in a column-like flow perpendicular to the plane defined by the plasmonic photocatalytic membrane (3). Preferably, the gas flow is cantered relative to the midpoint of the membrane (3), and more preferably, the gas inlet port (212) is positioned beneath the membrane (3), ensuring that the gas rises through the liquid medium in which the membrane (3) is submerged, preferably submerged in water, and preferably exposed to light.

This configuration is designed to optimize the interaction between the gaseous reactants and the photocatalytic sites of the membrane (3). By directing the gas flow in a perpendicular column towards the membrane (3), the system ensures homogeneous gas distribution across its active surface, preventing localized depletion or excessive concentration of reactants in specific areas.

In some embodiments, the gas inlet port (212) may be equipped with a diffuser, perforated plate, or microbubble generator to further enhance the dispersion of gas and maintain an even flow profile as it rises towards the membrane (3). The use of microbubbles or fine gas streams may increase the surface area available for mass transfer, allowing a higher proportion of the introduced gas molecules to reach the active sites of the plasmonic photocatalytic membrane (3). Additionally, the gas velocity may be controlled to balance the residence time of the gas within the liquid medium, maximizing the probability of reactant conversion before the gas exits the reactor (1).

This positioning of the gas inlet port (212) beneath the membrane (3) allows the gas to interact with the entire submerged photocatalytic surface before escaping the reaction medium. This setup prevents gas bypassing and ensures that reactants remain in close contact with the embedded nano- or micro-particle assemblies (5) for the longest possible duration, improving photocatalytic efficiency.

Advantageously, the configuration of the gas flow perpendicular to the membrane (3) significantly enhances the uniformity of reactant distribution, improving overall reaction efficiency and ensuring consistent photocatalytic performance across the entire membrane surface. The rising gas column maximizes gas-liquid-solid interactions, reducing diffusion limitations and promoting optimal reaction conditions. Additionally, the positioning of the gas inlet port (212) beneath the membrane (3) prevents stagnant zones or uneven reactant exposure, ensuring a continuous and controlled reaction process.

According to a preferred embodiment of the invention, the membrane (3) comprising the nano-or micro-particles is made by electrospinning a medium or suspension (31) comprising the synthetic polymer and the plurality of nano- or micro assemblies (5), such that the nano- or micro assemblies (5) become embedded within the nano- or micro-fibres during the electrospinning process.

It is noted that this particular definition of the product by the fabrication method provides an uniform distribution of the photocatalytic assemblies (5) throughout the membrane (3), a mechanical integrity and photocatalytic efficiency of the final structure, which are impossible to be obtained by other methodologies.

Electrospinning is a highly advantageous technique for producing membranes (3) with well-controlled fibre diameters, high porosity, and large surface area, all of which are critical for optimizing photocatalytic performance. The medium or suspension (31) used in the electrospinning process preferably comprises a natural or synthetic polymeric solution, preferably synthetic, wherein the polymer is dissolved or dispersed in a suitable solvent system, along with a dispersion of the nano- or micro-particle assemblies (5). In some embodiments, stabilizing agents or surfactants may be added to the suspension (31) to enhance the dispersion stability of the nano- or micro-particle assemblies (5), preventing aggregation and ensuring uniform incorporation into the electrospun fibres.

The electrospinning process allows these assemblies (5) to be uniformly distributed throughout the polymeric network, preventing clustering or sedimentation, which could otherwise reduce photocatalytic efficiency. In some embodiments, the relative concentration of the nano- or micro-particle assemblies (5) within the polymeric matrix may be adjusted to tailor the optical and catalytic properties of the membrane (3), optimizing its performance for specific photocatalytic reactions.

The choice of polymer in the electrospinning process may vary depending on the required mechanical properties, chemical stability, and compatibility with the photocatalytic nanoparticles, and it may comprise any of the natural or synthetic polymers previously described in different embodiments of the invention, being preferably PVA.

In some embodiments, modifications to the electrospinning parameters, such as voltage, flow rate, or collector configuration, may be implemented to control fibre alignment, thickness, and porosity. The fibres may be randomly oriented or aligned depending on the desired structural properties of the membrane (3). Additionally, in certain embodiments, post-processing treatments such as crosslinking, thermal annealing, or chemical functionalization may be applied to improve the membrane's durability, wettability, or interaction with reactants.

Advantageously, the use of electrospinning for fabricating the membrane (3) provides an unique control over the morphology, porosity, and nano- or micro-particle distribution within the fibre matrix, leading to the reported photocatalytic activity. The direct embedding of the nano- or micro-particle assemblies (5) within the fibres prevents loss of catalytic material due to leaching or detachment during operation, significantly improving the long-term stability and reusability of the membrane (3). Furthermore, the porous nature of the electrospun membrane (3) facilitates efficient gas-liquid-solid interactions, optimizing mass transport and reactant diffusion, thereby improving the overall performance of the photocatalytic flux reactor (1). This scalable and cost-effective fabrication approach makes the reactor (1) highly suitable for industrial applications requiring sustainable and high-throughput chemical production.

According to a second embodiment of the invention, a continuous reactor (1) according to any one of the disclosed embodiments of the first aspect of the invention, is used to generate NH₃ as a product, wherein water and a gas comprising N₂ (said gas being preferably atmospheric air or purified N₂), are continuously supplied as reactants to the reactor through at least one inlet port, and wherein NH₃ is continuously obtained from at least one outlet port. For example, the continuous reactor (1) used this way may comprise one inlet port for liquid, preferably water, saturated with gas, preferably N2 or CO2, or at least two independent inlet ports, one for liquid, preferably water, and a second one for gas, preferably N2 or CO2.

According to a preferred embodiment of the invention, a continuous reactor (1) according to any one of the disclosed embodiments of the first aspect of the invention, is used to generate CH₃OH as a product, wherein water and a gas comprising CO₂, said gas being preferably atmospheric air or purified CO₂, are continuously supplied as reactants to the reactor through at least one inlet port, and wherein CH₃OH is continuously obtained from at least one outlet port.

According to a third aspect of the invention, a method for manufacturing a photocatalytic membrane (3) for use in a reactor (1) according to any one of the embodiments of the first aspect of the invention previously described is disclosed. The method comprising the following steps:
a. providing a medium or suspension (31) comprising a synthetic polymer, preferably PVA, and a plurality of nano- or micro assemblies of particles (5), wherein each of said nano- or micro assemblies (5) comprises:
   i. optionally, one or more nano- or micro-particles of an insulating material (51) or one or more first semiconductor nano- or micro-particles such as a MOF, preferably one or more nanoparticles of an insulating material (51);
   ii. one or more plasmonic photocatalytic metallic nano- or micro-particles (52), preferably plasmonic photocatalytic nanoparticles (52); and
   iii. one or more second semiconductor nano- or micro-particles (53), preferably second semiconductor nanoparticles (53), or one or more metal ions (53);
b. generating the nano- or micro-fibres by electrospinning the medium (31) provided in step (a), wherein the plurality of nano- or micro assemblies of particles (5) are embedded within said nano- or micro-fibres; and
c. collecting or assembling said nano- or micro-fibres to form a membrane (3).

It is noted that this method allows a controlled integration of nano- or micro-particle assemblies (5) within a polymeric membrane (3) by means of electrospinning, yielding a highly porous and catalytically active structure optimized for photocatalytic applications.

In step (a), a medium or suspension (31) comprising a synthetic polymer, preferably polyvinyl alcohol (PVA), and a plurality of nano- or micro-particle assemblies (5) is provided, preferably nano-assemblies (5). The synthetic polymer serves as the structural matrix of the membrane (3), ensuring mechanical stability, processability, and compatibility with the embedded nano-or micro-particles. While PVA is preferred due to its excellent film-forming properties, hydrophilicity, and ability to stabilize nanoparticles, other synthetic polymers may be used depending on the required properties of the final membrane (3). Suitable alternatives may include polycaprolactone (PCL), polyethylene oxide (PEO), polyacrylonitrile (PAN), polylactic acid (PLA), polystyrene (PS), polyvinylpyrrolidone (PVP), polyethylene terephthalate (PET), polymethyl methacrylate (PMMA), polyurethane (PU), nylon-6, or blends thereof. In alternative embodiments, natural polymers such as cellulose, chitosan, alginate, silk fibroin, or gelatine may be employed, offering biodegradable and environmentally friendly membrane alternatives.

The plurality of nano- or micro-particle assemblies (5) dispersed in the medium (31) preferably comprise: (i) optionally, one or more nano- or micro-particles of an insulating material (51) or one or more first semiconductor nano- or micro-particles such as a MOF, (ii) one or more plasmonic photocatalytic metallic nano- or micro-particles (52), and (iii) one or more second semiconductor nano- or micro-particles or one or more metal ions (53). The insulating material (51), in some embodiments may comprise silica (SiO₂), alumina (Al₂O₃). Alternatively or additionally to the insulating material (51), it may be comprised a metal-organic frameworks (MOFs) such as UiO-67-bipyridine, which also serves as a support to enhance mechanical stability and improve dispersion of the catalytic components. It is noted that said MOFs in the reactor of the invention may be insulating or semiconductor, preferably semiconductor. Other alternatives or additional materials are, but is not limited to, MOFs members of the UiO, MIL or ZIF families, or instead of MOFs, COFs or porous materials or metamaterials, as well as MOPs, molecular cages and/or aerogels. The plasmonic photocatalytic metallic nano- or micro-particles (52), preferably consisting of gold nanospheres or nanostars, but in some other embodiments comprising silver (Ag), copper (Cu), platinum (Pt), palladium (Pd), aluminum (Al), nickel (Ni), zinc (Zn), titanium (Ti), and/or alloys such as Au-Ag or Au-Cu, are responsible for enhancing light absorption through localized surface plasmon resonance (LSPR), thereby increasing charge transfer efficiency. The second semiconductor nano- or micro-particles or metal ions (53) may comprise, but are not limited to, titanium dioxide (TiO₂), zinc oxide (ZnO), tungsten trioxide (WO₃), molybdenum disulfide (MoS₂), tungsten disulfide (WS₂), copper ions, or doped metal oxides, all of which facilitate redox reactions upon exposure to light. Alternatively or additionally to the insulating material (51), a first semiconductor nanoparticle, or a metal organic framework, insulating or semiconductor, may be employed to provide structural support.

It is noted that throughout the whole description, for every embodiment describing a first semiconductor material or nanoparticle and a second semiconductor material or nanoparticle, said materials or nanoparticles may be the same or different, preferably they are different, more preferably in size, shape and/or composition.

In step (b), the nano- or micro-fibres are generated by electrospinning the medium (31) provided in step (a). Electrospinning is a fibre fabrication process in which a high-voltage electric field is applied to the medium (31), causing the polymer solution to be drawn into ultrafine fibres that solidify upon contact with the collection substrate. It is noted that generally the embedded nano- or micro-particle assemblies (5) become uniformly distributed within the fibres during this process, ensuring their stable incorporation into the membrane (3). The electrospinning parameters, such as voltage, flow rate, polymer concentration, and collection distance, may be optimized to control fibre diameter, porosity, and mechanical properties of the resulting membrane (3). In some embodiments, additional functionalization steps, such as thermal annealing or surface treatment, may be performed post-electrospinning to improve the adhesion of nanoparticles within the fibres or to modify the surface properties of the membrane (3).

In step (c), the nano- or micro-fibres are collected or assembled to form a membrane (3). The collection method may vary depending on the desired membrane configuration. In some embodiments, the fibres may be deposited as a nonwoven mat, which provides a high surface area and permeability, allowing for efficient interaction with gaseous and liquid-phase reactants. Alternatively, aligned or patterned fibre structures may be created by controlling the collector design, resulting in membranes with specific porosity gradients or directional properties that may enhance photocatalytic performance. In some cases, post-processing steps such as mechanical compression, solvent evaporation, or crosslinking may be employed to improve membrane durability and ensure long-term stability under operational conditions.

Advantageously, the disclosed method allows for precise control over the composition, structure, and properties of the plasmonic photocatalytic membrane (3), resulting in a highly efficient and scalable photocatalytic system. Employing an electrospinning process allows homogeneous embedding of the nano- or micro-particle assemblies (5) within the polymeric fibres, preventing aggregation and maximizing their catalytic activity. The porous nature of the resulting membrane (3) facilitates efficient gas-liquid-solid interactions, improving mass transport and reactant diffusion to the active sites. Additionally, the method may be compatible with various polymeric materials, enabling customization of membrane properties for specific industrial applications. The scalability and cost-effectiveness of the manufacturing process further enhance the commercial viability of the reactor (1), making it a promising solution for sustainable chemical production under ambient conditions.

In a preferred embodiment of the method of the third aspect of the invention, the one or more nano- or micro-particles of an insulating material are silicon dioxide nano- or micro-particles; the one or more plasmonic photocatalytic metallic nano- or micro-particles are gold nano- or micro-particles, preferably gold nanostars; and the one or more second semiconductor nano-or micro-particles are titanium dioxide nano- or micro-particles.

In a preferred embodiment of the method of the third aspect of the invention, instead or in addition to the one or more nano- or micro-particles of an insulating material (51) it is comprised nano- or micro-particles of a metal-organic framework (MOF), preferably UiO-67-bipyridine; the one or more plasmonic photocatalytic metallic nano- or micro-particles (52) are gold nano-or micro-particles, preferably gold nanospheres; and the one or more metal ions (53) are copper ions (Cu²⁺). It is noted that said MOFs nano- or micro-particles may be insulating or semiconductor in some embodiments.

According to a preferred embodiment of the invention, a method for obtaining a continuous flow of NH₃ in a photocatalytic flux reactor (1) according to any one of the embodiments above described of the first aspect of the invention, is disclosed, wherein the reactor (1) comprises at least one inlet port (21), at least one outlet port (22), and a reaction chamber (2) comprising a plasmonic photocatalytic membrane (3). The method for obtaining a continuous flow of NH₃comprises the steps of:
a. providing a solution comprising N₂ and H₂O through a first inlet port (21), and/or providing a gas comprising N₂ through a gas inlet port (212) and a liquid comprising H₂O through a liquid inlet port (211);
b. contacting said solution, or the gas and the liquid, with the plasmonic photocatalytic membrane (3), the membrane (3) comprising a plurality of nano-or micro assemblies of particles (5), wherein each of said nano- or micro assemblies (5) comprises:
   i. optionally, one or more nano- or micro-particles of an insulating material (51) or one or more first semiconductor nano- or micro-particles such as MOF nano- or micro-particles;
   ii. one or more plasmonic photocatalytic metallic nano- or micro-particles (52); and
   iii. one or more second semiconductor nano- or micro-particles or one or more metal ions (53);
   and wherein said membrane (3) is exposed to light; and
c. obtaining NH₃ through at least one outlet port (22).

It is noted that this method enables the continuous synthesis of ammonia (NH₃) from nitrogen (N₂) and water (H₂O) under photocatalytic conditions, providing a sustainable alternative to, for example, the conventional Haber-Bosch process, which is energy-intensive and reliant on high-pressure hydrogen.

In step (a), a solution comprising N₂ and H₂O is provided through a first inlet port (21), and/or a gas comprising N₂ is provided through a gas inlet port (212), while a liquid comprising H₂O is provided through a liquid inlet port (211). The nitrogen gas (N₂) serves as the primary reactant for ammonia synthesis, while water (H₂O) acts as both a proton source and an electron donor for the reduction process. In some embodiments, the N₂ gas may be bubbled through the liquid medium, ensuring optimal dissolution and interaction with the plasmonic photocatalytic membrane (3). Alternatively, the gas inlet port (212) may be positioned to direct a column-like flow of nitrogen gas perpendicular to the membrane (3), ensuring homogeneous gas exposure to the active photocatalytic sites. The liquid inlet port (211) supplies preferably water, which undergoes oxidation to produce protons and oxygen (O₂), facilitating the reduction of nitrogen into ammonia.

In step (b), the provided solution, or the separately introduced gas and liquid phases, come into contact with the plasmonic photocatalytic membrane (3), which comprises a plurality of nano- or micro-particle assemblies (5). Each of these nano- or micro-particle assemblies (5) comprises: (i) optionally, one or more nano- or micro-particles of an insulating material (51) or one or more first semiconductor nano- or micro-particles, such as metal-organic framework (MOF) nano- or micro-particles, (ii) one or more plasmonic photocatalytic metallic nano- or micro-particles (52), and (iii) one or more second semiconductor nano- or micro-particles or one or more metal ions (53). The membrane (3) is preferably exposed to light, which activates the plasmonic photocatalytic metallic nano- or micro-particles (52), generating hot electrons via localized surface plasmon resonance (LSPR). These energetic electrons are transferred to the second semiconductor nano- or micro-particles (53) or metal ions (53), facilitating the activation and reduction of nitrogen molecules. It is noted that the reduction of nitrogen (N₂) to ammonia (NH₃) is one of the most challenging photocatalytic reactions due to the strong N≡N triple bond, which requires efficient charge separation and electron transfer mechanisms.

It is further noted that in some embodiments the insulating material (51) may be silicon dioxide (SiO₂), and in some embodiments it may be comprised alternatively or additionally, first semiconductor materials and/or metal-organic frameworks (MOFs), such as, but not limited to, members of the UiO, MIL or ZIF families, or instead of MOFs, COFs or porous materials or metamaterials, as well as MOPs, molecular cages and/or aerogels. It is noted that, among other properties, these particles allow a uniform distribution of the photocatalytic components while preventing aggregation. The plasmonic metallic nano- or micro-particles (52), in some embodiments may comprise or consist of gold (Au), silver (Ag), copper (Cu), or aluminum (Al), which enhance light absorption and promote efficient electron excitation. The second semiconductor nano- or micro-particles (53), preferably titanium dioxide (TiO₂), tungsten disulfide (WS₂), or molybdenum disulfide (MoS₂), more preferably TiO₂, act as electron acceptors, ensuring prolonged charge separation and efficient catalytic activity. In some embodiments, co-catalysts such as ruthenium (Ru), iron (Fe), or cobalt (Co) may be incorporated to further improve nitrogen activation and ammonia formation. Alternatively, or additionally to the insulating material (51), a semiconductor material, or a metal organic framework, insulating or semiconductor, may be employed to provide structural support.

In step (c), the ammonia (NH₃) produced via the photocatalytic reduction of nitrogen is collected through at least one outlet port (22). The continuous flow nature of the reactor (1) ensures that ammonia is efficiently removed from the reaction chamber (2), preventing product accumulation and promoting sustained reaction kinetics. In some embodiments, downstream separation units such as condensers or selective adsorption systems may be integrated to isolate ammonia from unreacted nitrogen or water vapor. Additionally, reaction conditions such as pH, temperature, and light intensity may be dynamically controlled to optimize the selectivity and yield of ammonia production.

Advantageously, this method provides a highly efficient, low-energy pathway for ammonia synthesis using only nitrogen, water, and light, eliminating the need for hydrogen gas or extreme reaction conditions. The integration of a plasmonic photocatalytic membrane (3) ensures enhanced light absorption, efficient charge transfer, and stable long-term performance. The reactor (1) design optimizes gas-liquid-solid interactions, maximizing nitrogen reduction rates and ammonia yields. Furthermore, the continuous flow process enables scalable and industrially viable ammonia production, offering a sustainable alternative for fertilizer manufacturing, hydrogen storage, and other ammonia-based chemical applications.

In a preferred embodiment of the method above disclosed, the one or more nano- or micro-particles of an insulating material are silicon dioxide nano- or micro-particles; the one or more plasmonic photocatalytic metallic nano- or micro-particles are gold nano- or micro-particles, preferably gold nanostars; and the one or more second semiconductor nano- or micro-particles are titanium dioxide nano- or micro-particles.

According to a preferred embodiment of the invention, a method for obtaining a continuous flow of CH₃OH in a photocatalytic flux reactor (1) according to any one of the embodiments above described of the first aspect of the invention, is disclosed, wherein the reactor (1) comprises at least one inlet port (21), at least one outlet port (22), and a reaction chamber (2) comprising a plasmonic photocatalytic membrane (3). The method for obtaining a continuous flow of CH₃OH comprises the steps of:
a. providing a solution comprising CO₂ and H₂O through an inlet port (21), and/or providing a gas comprising CO₂ through a gas inlet port (212) and a liquid comprising H₂O through a liquid inlet port (211);
b. contacting said solution, or the gas and liquid, with the plasmonic photocatalytic membrane (3), the membrane (3) comprising a plurality of nano- or micro assemblies of particles (5), wherein each of said nano- or micro assemblies (5) comprises:
   iv. optionally, one or more nano- or micro-particles of an insulating material (51) or one or more first semiconductor nano- or micro-particles, preferably of a metal-organic framework (MOF);
   v. one or more plasmonic photocatalytic metallic nano- or micro-particles (52); and
   vi. one or more second semiconductor nano- or micro-particles or one or more metal ions (53);
   and wherein said membrane (3) is exposed to light; and
c. obtaining CH₃OH through at least one outlet port (22).

It is noted that this method enables the continuous production of methanol (CH₃OH) from carbon dioxide (CO₂) and water (H₂O) under photocatalytic conditions, providing a sustainable alternative to conventional methanol synthesis processes that rely, for example, on fossil fuel-derived syngas.

In step (a), a solution comprising CO₂ and H₂O is provided through an inlet port (21), and/or a gas comprising CO₂ is provided through a gas inlet port (212) while a liquid comprising H₂O is provided through a liquid inlet port (211). In some embodiments, the CO₂ may be pre-dissolved in water to form a carbonate or bicarbonate solution, improving mass transport efficiency and enhancing the interaction between CO₂ and the plasmonic photocatalytic membrane (3). Alternatively, gaseous CO₂ may be directly introduced through a gas inlet port (212), allowing, for example, the gas to rise in a column perpendicular to the membrane (3) to ensure uniform exposure of the catalytic surface to the reactant. The liquid inlet port preferably (211) supplies water, which serves as both a reactant and a source of protons and electrons required for the reduction of CO₂ to methanol. In certain embodiments, additional reactants, stabilizers, or pH-adjusting agents may be introduced to optimize the reaction environment.

In step (b), the provided solution, or the separately introduced gas and liquid phases, come into contact with the plasmonic photocatalytic membrane (3), which comprises a plurality of nano- or micro-particle assemblies (5), wherein preferably the photocatalytic membrane (3) is under illumination. Each of these nano- or micro-particle assemblies (5) comprises: (i) optionally, one or more nano- or micro-particles of an insulating material (51) or one or more first semiconductor nano- or micro-particles, preferably of a metal-organic framework (MOF), (ii) one or more plasmonic photocatalytic metallic nano- or micro-particles (52), and (iii) one or more second semiconductor nano- or micro-particles or one or more metal ions (53). The membrane (3) is preferably exposed to light, which activates the plasmonic photocatalytic metallic nano- or micro-particles (52), inducing localized surface plasmon resonance (LSPR) and generating hot electrons that are transferred to the second semiconductor nano- or micro-particles or metal ions (53). This charge transfer initiates a series of redox reactions at the surface of the membrane (3), leading to the reduction of CO₂ to methanol (CH₃OH) and the oxidation of water to oxygen (O₂).

The presence of the insulating material (51), such as silicon dioxide (SiO₂) or a semiconductor or insulating metal-organic framework (MOF), facilitates the dispersion of the active photocatalytic components while preventing nanoparticle aggregation, thereby maintaining long-term photocatalytic efficiency. Other alternatives to the one or more nano- or micro-particles of an insulating material (51) or one or more first semiconductor nano- or micro-particles, preferably comprising a metal-organic framework (MOF) are, but is not limited to, COFs or porous materials or metamaterials, as well as MOPs, molecular cages, aerogels. Additionally, MOFs may comprise, but are not limited to, members of the UiO, MIL or ZIF families The second semiconductor nano- or micro-particles (53) facilitate charge separation and redox reactions, while the plasmonic metallic nano- or micro-particles (52) enhance light absorption and electron transfer efficiency. In some embodiments, co-catalysts such as copper (Cu), molybdenum disulfide (MoS₂), or ruthenium (Ru) may be incorporated to further promote CO₂ activation and methanol formation.

In step (c), the methanol (CH₃OH) formed through the photocatalytic reduction of CO₂ is collected through at least one outlet port (22). The continuous flow configuration of the reactor (1) allows that methanol to be consistently removed from the reaction chamber (2), preventing product accumulation and enabling steady-state operation. In some embodiments, a separation unit or condenser may be incorporated downstream of the outlet port (22) to isolate methanol from any unreacted water or gaseous byproducts. Additionally, recycling loops may be implemented to recirculate unreacted CO₂ or optimize reactant utilization.

Advantageously, this method enables the continuous and sustainable production of methanol (CH₃OH) using only CO₂, water, and light as inputs, eliminating the need for high-pressure, high-temperature conditions or fossil fuel-derived reagents. The integration of a plasmonic photocatalytic membrane (3) ensures efficient charge separation, enhanced light absorption, and stable long-term performance. The reactor (1) design allows for optimal gas-liquid-solid interactions, maximizing reaction rates and methanol yields. Furthermore, the continuous flow nature of the process makes it highly scalable for industrial applications, providing a viable pathway for carbon capture and utilization (CCU) while producing valuable chemical feedstocks or alternative fuels under ambient conditions.

In a preferred embodiment of the method above disclosed, instead or in addition to the one or more nano- or micro-particles of an insulating material (51) there may be comprised nano- or micro-particles of a metal-organic framework (MOF), preferably of a University of Oslo (UiO) variant, such as, but not limited to UiO-67-bipyridine; the one or more plasmonic photocatalytic metallic nano- or micro-particles (52) are gold nano- or micro-particles, preferably gold nanospheres; and the one or more metal ions (53) are copper ions (Cu²⁺).

To enable a better understanding of the present disclosure, reference will now be made, by way of example only, to the accompanying schematic drawings. It is important to note that the following schematic drawings are provided solely as exemplary, non-limiting potential embodiments of the invention. Accordingly, the drawings are to be regarded as illustrative instead of restrictive, serving merely to aid in the explanation of the invention's principles and potential applications.

The figures provided are merely representational and may not be drawn to scale. Certain proportions theremay be exaggerated, while others may be minimized. The figures are intended to illustrate various implementations of the invention that can be understood and appropriately carried out by those of ordinary skill in the art. Commonly designated elements among the various figures refer to common or equivalent elements in the depicted embodiments. The figures are not intended to be exhaustive or to limit the invention to the precise form disclosed. It should be understood that the invention can be practiced with modification and alteration, and that the invention be limited only by the claims and the equivalents thereof.

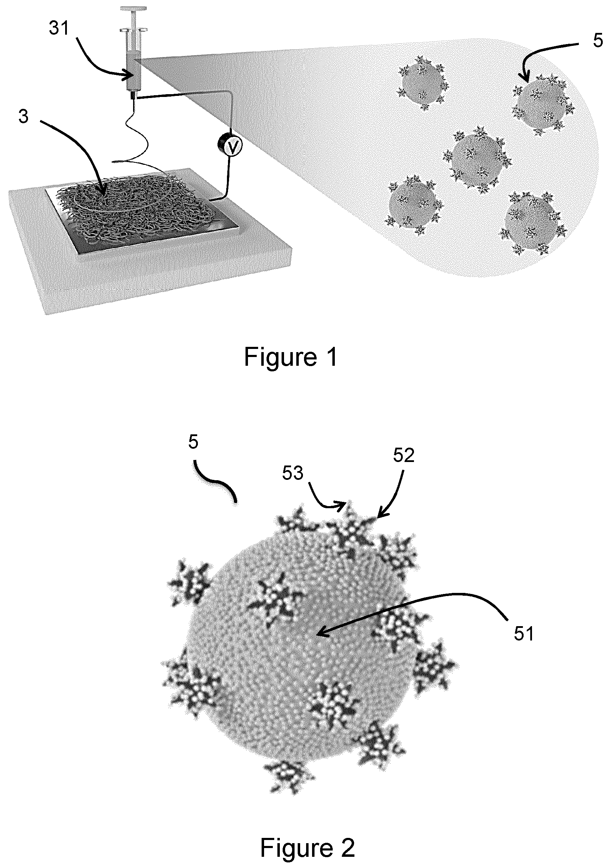

Figure 1 shows a schematic representation of an electrospinning setup according to one or more embodiments of the invention, wherein a mixture (31) of a dissolved synthetic polymeric material (preferably poly-vinyl alcohol PVA) and plasmonic photocatalytic nanoparticle or microparticle assemblies (5) is electro-spun, obtaining nano- or micro-fibres with said nanoparticle or microparticle assemblies embedded inside the hollow, tube-like, nano or micro-fibres. In the image the fibres are collected on a plate surface, being thus aggregated into a planar membrane (3), however other shapes may be achieved modifying the collector shape, such as tubes, among other options. As shown in image 1, the nano or micro-particles assemblies (5) are nano- or micro-spheres of an insulator material (51), which serves as support for plasmonic metallic nano or micro-stars (52) attached to the surface, and smaller nano- or micro-spheres of a semiconductor material (53) are covering the nano- or micro-spheres (51) and the nano- or micro-stars (52). It is noted that this depicts just an embodiments, and the sizes are not drawn to scale, additionally, the number of plasmonic metallic nano or micro-stars (52) and nano- or micro-spheres of a semiconductor material (53) attached to the surface of the nano- or micro-spheres of an insulator material (51) may vary. Also, the size and shape of any of the nano- or micro-particles (51, 52 and 53) may vary in different embodiments of the invention, and their relative size, which is depicted with an exemplary aspect-ratio in figure 1. It is also noted that in some embodiments, instead of a synthetic polymeric material, it may be employed a natural polymeric material such as chitosan, cellulose, silk fibroin, gelatine, or collagen, as long as it serves as support for the plasmonic photocatalytic nano- or micro-particles, and allows them to be embedded inside the fibres of the membrane (3) of said natural polymeric material, preferably being an insulator, and preferably being able to be processed by electrospinning.

Figure 2 shows a detail of a computer generated 3D model of a nano- or micro-particle assembly (5) according to one or more embodiments of the invention. The figure shows a big nano- or micro-sphere of an insulator material (51), preferably SiO₂, which serves as support for plasmonic metallic nano or micro-stars (52) attached to the surface, preferably made of gold, which can be appreciated to have a darker colour, and it can also be appreciated white smaller nano- or micro-spheres of a semiconductor material (53), preferably TiO₂, that are covering the bigger nano- or micro-spheres (51) and the nano- or micro-stars (52). It is noted that the physical photocatalytic effect is mostly produced by the gold nanostars or, more efficiently, by the combination of gold nanostars and titanium oxide nanoparticles, as it can be observed by the production yield shown in Figure 7. Therefore, in some embodiments, the nano- or micro-particle assembly (5) may not comprise a nano- or micro-sphere of an insulator material (51), and instead the plasmonic metallic nano or micro-particles (52) and the nano- or micro-particles of a semiconductor material (53) may be directly embedded inside the membrane (3) fibres, which are also insulator, or be attached to a different insulating support, such as nano- or micro-rods, -tubes, -prisms, -sheets, or suitable frameworks.

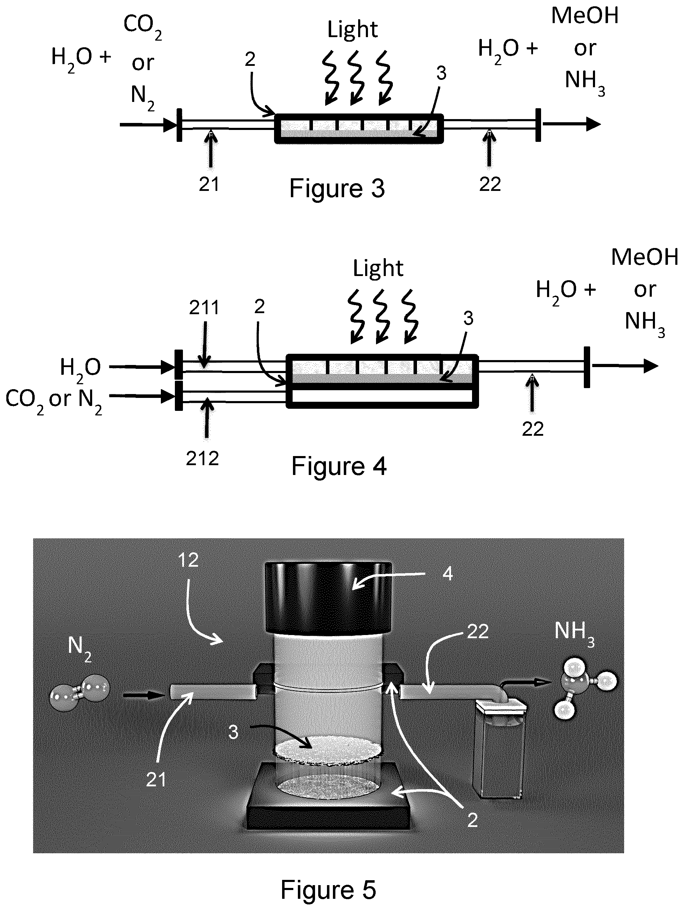

Figure 3 shows a schematic representation of a photocatalytic flux reactor (1) according to one or more embodiments of the invention. The reactor (1) comprises a reaction chamber (2) in fluid communication with at least one inlet port (21) for introducing reactants and at least one outlet port (22) for collecting reaction products. The reaction chamber (2) comprises a plasmonic photocatalytic membrane (3), which facilitates the photocatalytic reaction under continuous flow conditions. In the illustrated embodiment, the inlet port (21) introduces a mixture of water and carbon dioxide (H₂O + CO₂) or water and nitrogen (H₂O + N₂), while the outlet port (22) allows the collection of methanol (MeOH) if water and carbon dioxide is input, with the photocatalytic flux reactor (1) comprising a plasmonic photocatalytic membrane according to some embodiments, or ammonia (NH₃) if water and nitrogen is input, with the photocatalytic flux reactor (1) comprising a plasmonic photocatalytic membrane according to different embodiments of the invention, as the reaction product, along with unreacted water.

The reaction chamber (2) is configured to allow or facilitate light access to the plasmonic photocatalytic membrane (3). In some embodiments, this is achieved via an integrated light source or by incorporating a window or transparent section in the chamber wall, allowing natural sunlight or artificial light to irradiate the membrane (3). The light may include visible, ultraviolet (UV), or infrared (IR) wavelengths, depending on the specific photocatalytic nanoparticles embedded within the membrane. It is noted that the illumination enhances the photocatalytic activity of the nanoparticle assemblies embedded in the membrane fibres, driving the desired chemical reaction, as it can be observed in figure 8, comparing the efficiencies of the plasmonic photocatalytic membrane (3) under illumination or in the dark.

The plasmonic photocatalytic membrane (3) may comprise nano- or micro-fibres formed from a synthetic polymer, such as polyvinyl alcohol (PVA), or, in some other embodiments, a natural polymer, such as chitosan, cellulose, silk fibroin, or collagen. These fibres comprise in their interior nanoparticle assemblies (5), which comprise plasmonic metallic nano- or micro-particles (52), second semiconductor nano- or micro-particles (53), and optionally insulating nano- or micro-particles (51) as supporting structure. In preferred embodiments, the plasmonic metallic particles (52) are gold nano-stars, the semiconductor particles (53) are titanium dioxide (TiO₂), and the insulating particles (51) are silicon dioxide (SiO₂). However, alternative materials and configurations may also be employed, such as plasmonic nano- or micro-particles of silver, copper, or alloys thereof; semiconductor particles of zinc oxide (ZnO) or tungsten oxide (WO₃), or metallic ions; and insulating particles from metal-organic frameworks (MOFs), such as UiO-67-bipyridine.

It is noted that figure 3 represents an exemplary embodiment, and the configuration, materials, and operational parameters of the reactor (1) may vary. For example, the reactor (1) may include multiple reaction chambers (2) in series or parallel configurations, or the membrane (3) may be fabricated in non-planar geometries, such as tubular, cylindrical, or spiral shapes. Additionally, the inlet (21) and outlet (22) ports may include flow control mechanisms, such as valves, pumps, or flow meters, to regulate the continuous flow of reactants and products. Furthermore, the specific proportions and concentrations of reactants, as well as the wavelength and intensity of the light source, may be optimized for different photocatalytic reactions or operating conditions.

In alternative embodiments, the plasmonic photocatalytic membrane (3) may not require insulating nano- or micro-particles if the fibres themselves, being made of insulating materials, serve to stabilize the plasmonic and semiconductor components. Additionally, other light-harvesting and catalytic configurations, such as hybrid membranes incorporating metal-doped semiconductors or composite polymer-metal matrices may be employed.

Figure 4 shows a schematic representation of a photocatalytic flux reactor (1) according to one or more embodiments of the invention. While similar to the photocatalytic flux reactor (1) displayed in figure (3), in this exemplary embodiment there are two inlet ports (21), one liquid inlet port (211) for, in this case, water, and one gas inlet port (212) for, in this case, CO₂ or N₂.It is noted that this allows the injection of the gas below the membrane (3), which in this example remains submerged in water during operation of the continuous flow reactor (1) and under illumination, this allows the gas to perpendicularly cross the membrane when displaced upwards, providing the full width of the membrane (3) with a continuous and stable flow of reactant gas. In the embodiment depicted in figure 4, it can be understood that the exit of the gas inlet port (212) is perpendicular to the plane defined by the plasmonic photocatalytic membrane (3), or it allows the gas to be displaced perpendicular to the plane defined by the plasmonic photocatalytic membrane (3).

Figure 5 shows a 3D computer-generated render of an exemplary embodiment of a photocatalytic continuous flow reactor (1) specifically configured for the synthesis of ammonia (NH₃) from nitrogen (N₂) and water, according to one or more embodiments of the invention. The reactor (1) includes a reaction chamber (2) in fluid communication with an inlet port (21) for introducing nitrogen gas and water (in vapor or liquid form) and an outlet port (22) for collecting the produced ammonia. The main feature of the reaction chamber (2) is the plasmonic photocatalytic membrane (3), which in this example is positioned horizontally within the chamber.

Above the reaction chamber (2) there is placed a light source (4), depicted here as an integrated lamp that emits light in a spectrum preferably optimized for photocatalysis, such as ultraviolet (UV), visible, and/or infrared (IR) wavelengths. This light source (4) irradiates the plasmonic photocatalytic membrane (3) to activate the embedded nanoparticle assemblies. In some embodiments, the reactor (1) may comprise, instead or in addition to the light source (4), a transparent or translucent chamber wall (12) to allow sunlight or external light sources to illuminate the membrane (3), thus broadening the energy input options and reducing operational costs.

The fibres of the plasmonic photocatalytic membrane (3) are porous, allowing nitrogen gas and water vapor to infiltrate the catalytic sites within the membrane. This porosity enables efficient reactant interaction with the embedded nanoparticle assemblies, enhancing the catalytic conversion of nitrogen and water into ammonia. In some embodiments, the membrane (3) may be designed with a curved or angled geometry to optimize the light distribution and fluid dynamics within the reactor (1).

The flow of reactants and products through the reactor (1) may be modified to ensure optimal residence time within the reaction chamber (2). This may be achieved using flow control devices such as valves, pumps, or mass flow controllers positioned along the inlet (21) and outlet (22). Additionally, the reactor (1) and/or the reaction chamber (2) may comprise a cooling or heating mechanism (not depicted in figure 5) to maintain the desired reaction temperature, as certain photocatalytic processes may benefit from temperature optimization.

The configuration of the reactor (1) as shown in Figure 5 is suitable for industrial-scale operations with conventional modifications, such as comprising multiple reaction chambers (2) arranged in parallel or series to increase production capacity. Alternatively, the plasmonic photocatalytic membrane (3) could be fabricated as a continuous belt or roll, enabling large-scale continuous processing of reactants.

It is noted that while this figure depicts nitrogen as the primary reactant for ammonia synthesis, the reactor (1) may also be adapted for other photocatalytic processes, such as the production of methanol from carbon dioxide and water. This versatility can be achieved by selecting appropriate nanoparticle assemblies for the membrane (3) and tailoring the operating conditions, such as light wavelength, reactant flow rates, and reaction temperature. Preferably, for generating ammonia from nitrogen and water, the plasmonic photocatalytic membrane (3) comprises nano- or micro-particle assemblies (5) that comprise one or more plasmonic photocatalytic metallic nano- or micro-particles (52), one or more second semiconductor nano-or micro-particles (53), and optionally, comprise one or more nano- or micro-particles of an insulating material (51) as supporting structure for the other nano-or micro-particles (52, 53), or instead, or in addition to the nano- or micro-particles of an insulating material (51), the supporting structure may be comprise first semiconductor nano- or micro-particles, preferably nano- or micro-particles of a MOF, such as, but not limited to, members of the UiO, MIL or ZIF families, or instead of MOFs, it may comprise nano- or micro-particles of a COFs or porous materials or metamaterials, as well as MOPs, molecular cages and/or aerogels. Preferably for generating ammonia from nitrogen and water, the plasmonic photocatalytic membrane (3) comprises nano- or micro-particle assemblies (5) that comprise one or more plasmonic photocatalytic gold nano- or micro-particles (52), more preferably gold nano-stars, one or more titanium dioxide nano- or micro-particles (53), and optionally, comprise one or more nano- or micro-particles of silicon dioxide (51) as supporting structure for the other nano-or micro-particles (52, 53)

It is noted that in some embodiments the photocatalytic flux reactor (1) of the invention may comprise monitoring and control systems, such as sensors to measure reactant concentrations, temperature, pressure, and product yield. These sensors may be connected to a computerized system for real-time process optimization. Furthermore, the reactor (1) may incorporate self-cleaning mechanisms or replaceable membranes to maintain consistent performance over extended operational periods, addressing potential issues such as fouling or degradation of catalytic activity.

Figure 6 shows a picture of a plasmonic photocatalytic membrane (3) according to one or more embodiments of the invention. The membrane (3) shown in figure 6 is a thin, flexible, and porous structure composed of nano- or micro-fibers embedded with nano- or micro-particle assemblies (5), which serve as the active catalytic components for photocatalytic processes such as the synthesis of ammonia (NH₃) or methanol (MeOH). The membrane shown in Figure 6 has a planar circular geometry, though it is noted that alternative shapes and configurations, such as rectangular sheets, tubular forms, or customized patterns, may be employed depending on the specific reactor design and application requirements.

The membrane (3) is preferably fabricated through electrospinning or similar techniques, which allow for the precise incorporation of nano- or micro-particle assemblies (5) into the fibrous matrix. These nano- or micro-particle assemblies (5) may include plasmonic photocatalytic metallic nano- or micro-particles (e.g., gold nanostars or nanospheres), second semiconductor nano- or micro-particles (e.g., titanium dioxide) or metal ions (e.g., Cu²⁺, Cu⁺ or Cu⁰), and optionally insulating nano- or micro-particles (e.g., silicon dioxide or metal-organic frameworks such as UiO-67-bipyridine). The embedded particles may be distributed uniformly or in controlled patterns to optimize light absorption, charge separation, and reaction efficiency.

The membrane's high porosity allows for the infiltration of reactants, such as nitrogen (N₂), carbon dioxide (CO₂), and water (H₂O), into the catalytic sites while ensuring efficient mass transfer of reaction products, such as ammonia or methanol. Additionally, the fibrous structure and transparency/translucency enhances light penetration into the membrane, maximizing the activation of the embedded plasmonic and semiconductor particles.

It is noted that in some embodiments the membrane (3) may be fabricated from a variety of synthetic polymers, such as polyvinyl alcohol (PVA), or natural polymers, such as chitosan, cellulose, silk fibroin, or collagen, depending on the specific application and desired properties. The polymer material may also be modified to enhance thermal stability, chemical resistance, or compatibility with specific reactants or reaction conditions.

Figure 6 represents an exemplary embodiment, and the size, thickness, and fibre diameter of the membrane (3) may vary depending on the reactor configuration and process requirements. In alternative embodiments, the membrane may be fabricated with multiple layers, each containing different types or concentrations of nanoparticle assemblies, to target specific reactions or enhance overall performance. Additionally, the membrane may include reinforcement layers or coatings to improve durability, particularly in industrial-scale applications with prolonged operational times.

Figure 7 illustrates a comparative bar graph showing the production of ammonia (NH₃) in micromoles per gram per hour (µmol/g·h) under illumination for various combinations of nano-or micro-particle assemblies (5) and their individual components. The configurations tested include nano- or micro-particles of an insulating material (51), specifically silicon dioxide (SiO₂), combined with plasmonic photocatalytic metallic nano- or micro-particles (52), specifically gold nanostars (AuNSs), and/or second semiconductor nano- or micro-particles (53), specifically titanium dioxide. The graph also includes results for the individual components tested independently, as well as a hybrid system containing plasmonic (AuNSs) and semiconductor particles (TiO₂) attached to an insulating support material (SiO₂) but without being embedded in a membrane.

The results demonstrate that the combination of all three components-SiO₂, TiO₂, and AuNSs-integrated into a single nano- or micro-particle assembly (SiO₂@TiO₂@AuNSs), and embedded inside the fibres of a membrane (3) (made in this case of polyvinyl alcohol electrospun together with the nano- or micro-particle assemblies (5), achieves an unexpected and outstanding ammonia production rate not achieved by the combination of the elements alone. This highlights the synergistic interaction between the plasmonic nanoparticles, semiconductor particles, and insulating support material while being embedded in polymeric fibres inside a membrane (3), which collectively enhance light absorption, charge separation, and catalytic activity. The presence of the insulating material and the membrane (3) provides a stable support that facilitates optimal dispersion of the plasmonic and semiconductor particles while preventing aggregation, ensuring efficient catalytic performance.

In contrast, configurations missing one of the critical components, such as membranes with SiO₂@AuNSs (without TiO₂), or with SiO₂@TiO₂ (without AuNSs), produce significantly lower yields. This indicates that the absence of the plasmonic photocatalytic metallic particles, the semiconductor particles or the membrane severely limits the reaction's efficiency. On the other hand, the use of SiO₂ alone as a baseline demonstrates negligible photocatalytic activity.

The hybrid configuration without a membrane, which combines plasmonic and semiconductor particles without the use of an insulating support, produces a moderate yield of ammonia but performs substantially worse than the fully integrated SiO₂@TiO₂@AuNSs assembly. This result underscores the importance of the structure created by embedding the assemblies (5) inside the nano- or micro-fibres of the membrane, and highlights its role allowing the diffusion of liquid, gas, in maintaining the structural stability and in dispersion of the active photocatalytic components, as well as promoting charge separation after light absorption. By comprising the nano- or micro-particle assemblies (5) embedded inside the fibres of the membrane (5), it is facilitated a planar structure, with a more or less regular concentration of photocatalytic active assemblies (5) arranged in a densely packed configuration, perpendicular to the light input. Furthermore, embedding these components within a membrane enhances light penetration and reactant accessibility, further optimizing the photocatalytic process.

Figure 8 depicts a bar graph comparing the ammonia (NH₃) production rates in micromoles per gram per hour (µmol/g·h) under two different conditions: illumination ("Light") and the absence of illumination ("Darkness"). The results clearly demonstrate that the reaction proceeds more efficiently under light, with significantly higher ammonia yields observed in the illuminated condition. This difference highlights the strong photocatalytic effect of the plasmonic photocatalytic nano- or micro-particle assemblies (5) embedded within the plasmonic photocatalytic membrane (3).

The higher production rate under light is attributed to the activation of the plasmonic photocatalytic metallic nano- or micro-particles (52) and second semiconductor nano- or micro-particles (53) embedded in the membrane. The light activates localized surface plasmon resonance (LSPR) in the plasmonic particles (e.g., gold nanostars), generating energetic "hot" electrons that are transferred to the conduction band of the semiconductor particles (e.g., titanium dioxide). This enhances the separation of photogenerated charges (electrons and holes) and provides the energetic carriers necessary for driving the reduction of nitrogen (N₂) to ammonia.

These results conclusively demonstrate that the photocatalytic system is highly effective when exposed to light, achieving significantly enhanced performance..

### Examples

### Synthesis and Functionalization of Monodisperse Silica Spheres (500t 20 nm in diameter)

Silica nanoparticles were prepared via the so-called Stöber process is based on a hydrolysis of TEOS followed by a condensation reaction with slight modifications. The reactions were carried out in an Erlenmeyer flask containing 17.27 mL EtOH, 1.44 mL Milli-Q H2O and 4.87 mL NH4OH and mixed at 500 rpm at room temperature (RT). After 1 min, 1.42 mL of TEOS was added to the solution and the solution was left 2h at 800 rpm. After reaction, the suspension was centrifuged at 4500 rpm, 10 min and washed with ethanol by three cycles to remove any residual organics and ammonia. Subsequently, PDDA was dissolved in 0.5 M NaCl with a final polymer concentration of 1 mg/mL. Then, 150 mL of the positively charged PDDA solution was added to 120 mg of silica nanoparticles and stirred at RT for 20 min. The excess of reagents was removed by three centrifugation-redispersion cycles with water at 6000 rpm for 20 min. The diameter obtained was 500 ± 20 nm.

### Synthesis of Gold Nanostars (AuNSTs).

AuNSTs were synthesized following a previously described method. [5] First, 50 mL of AuNS, obtained from a gold seed solution via the Turkevich method, [6] was stirred at 300 rpm in a 100 mL glass vial and left RT for 24 hours with 5 mL of PVP10 (0.03 mg/mL). The PVP-coated gold seed solution was then centrifuged at 9000 rpm for 30 minutes and subsequently redispersed in 10 mL of ethanol. Next, 34 µL of an aqueous HAuCl₄ solution (0.1192 M) was mixed with 1.5 g of PVP10 in 14.78 mL of DMF. Then, 189.7 µL of the PVP-coated gold seed solution (1.898 mM) was rapidly added under constant stirring at 4°C for 1 hour. The resulting blue solution was washed with ethanol and finally redispersed in water after centrifugation at 7500 rpm for 30 minutes. This protocol was further extended to enable size control of the stars, resulting in a core diameter of 25 ± 5 nm and spike lengths ranging from 6 to 15 nm.

### Deposition of AuNSTs on SiO2 spheres and polyelectrolyte coating.

A solution of 15.3 mL of 0.45 mM AuNSTs was added to functionalized silica nanoparticles (0.5 mg/mL). The mixture was stirred at room temperature for 30 minutes. Excess AuNPs were removed by three centrifugation-redispersion cycles with water (3000 rpm, 20 minutes). Finally, the sediment was functionalized with 150 mL of PDDA (1 mg/mL in 0.1 M NaCl) for 30 minutes. The final product was washed with H₂O four times at 4500 rpm for 10 minutes.

### Deposition of TiO2.

The deposition of TiO2 were synthesized following a previously protocol with some modifications. 120 mg of TiO2 (5 nm) redispersed in 500 mL of a sodium citrate solution (1 mM) was sonicated for 1 h with an ultrasonic tip. Then, 10 mL of SiO2@AuNSTs (2 mg/mL) was added to the solution of TiO2 and stirred at RT for 90 min. The excess of TiO2 was removed by three centrifugation-redispersion cycles with water at 3000 rpm for 20 min. Finally, the product was redispersed in 10mL water. The ratio Au/TiO2 is 11.56% wt was calculated by Inductively Coupled Plasma Optical Emission Spectroscopy (ICP-OES).

### Preparation of the polymeric solution.

Using a reflux system, the PVA polymer solution is prepared by dispersing 6 g of the polymer in 50 mL of Mili-Q water, which is kept under stirring for 4 hours at 90 °C, observing the complete dissolution of the polyol. Then 2 mL of the PVA solution is placed in a vial and 1 mL of SiO2 redispersed in Mili-Q water (EQ 7000) is added and encapsulated inside the nanofibers to study photocatalysis. The sample is homogenized at 400 rpm for 3 hours and sonicated for 10 minutes. This process is carried out for the 3 synthesized nanostructures: SiO2@TiO2, SiO2@AuNSTs and SiO2@AuNSTs@TiO2.

### Membrane formation by electrospinning.

The FLUIDNATEK LE-50 electrospinning machine is used to prepare the membranes. The polymer solution is filled into a 5 mL syringe and connected to the machine's own system. A vertical setup with a flat collector is used. The applied voltage is +12 kV at the needle and -2 kV at the manifold, the pump flow rate is 1.5 mL/h and the distance between needle and manifold is 12 cm. Use of the FLUIDNATEK environmental control unit (ECU): Temperature and RH control [LE50ECU], a temperature of 20°C and a humidity of 35% are set so that the membranes are reproducible at all times. In the electrospinning process, the surface tension of the charged polymer droplet causes the formation of the Taylor cone. The charged liquid then exits in the form of fibers to the collector, where the polymer, solidified by the evaporation of the solvent, is collected as a membrane on aluminium foil. The collected membrane is characterized by scanning electron microscopy (SEM) on a JEOL JEM 6700F to check that the nanostructures are encapsulated within the nanofibers.

### Continuous photocatalysis system.

To introduce the membrane into the photocatalyst system prepared in the laboratory, it is necessary to cut out a circumference of at least 1 cm in diameter. The procedure for carrying out photocatalysis in the patented system begins by saturating chromatographic water (Supelco, Sigma Aldrich) with nitrogen for 30 minutes. For each test, the water is collected in a syringe which is pumped (NE-4000 Programmable 2 Channel Syringe Pump, New Era Pump Systems) through a channel until it reaches the different membranes. At this point, the Pico LED Solar Simulator lamp (G2V Optics) shines a 350W beam of light (350-2400nm) which triggers the photocatalytic reaction. The final product exits through a channel on the opposite side to the inlet and is poured into an Erlenmeyer flask. An aliquot of 200 µL of the resulting solution is collected and, using the indophenol blue method, 50 µL of sodium hypochlorite and 50 µL of phenol nitroprusside are added. The sample is kept in the dark for 1 hour and a blue coloration is observed which is proportional to the amount of ammonia present in the sample. Using a spectrophotometer (Cary 8454 UV-vis, Agilent Technologies), the absorbance of the sample is measured and plotted against the calibration curve to obtain the ammonia concentration.

## Claims

1. A photocatalytic flux reactor (1) comprising:
a. a reaction chamber (2) with at least one inlet port (21) and at least one outlet port (22), wherein said reaction chamber (2) comprises a plasmonic photocatalytic membrane (3); and
b. means for illuminating and/or allowing light access (4) to the membrane (3) within the reaction chamber (2), preferably wherein said means for illuminating and/or allowing light access (4) comprise a light source and/or a window, and wherein said means for illuminating and/or allowing light access may be comprised in the reaction chamber (2);
wherein the reactor (1) is configured to operate under a continuous flow of reactants from the at least one inlet port (21) towards the at least one outlet port (22) through the reaction chamber (2); and
wherein the plasmonic photocatalytic membrane (3) comprises:
c. a plurality of nano- or micro-fibres of at least one synthetic polymer, wherein said nano- or micro-fibres comprise a plurality of nano- or micro-particle assemblies (5) embedded within them, each of said assembly (5) comprising:
i. optionally, one or more nano- or micro-particles of a first semiconductor or insulating material (51);
ii. one or more plasmonic metallic nano- or micro-particles (52); and
iii. one or more nano- or micro-particles of a second semiconductor material and/or one or more metal ions (53).

2. The photocatalytic flux reactor (1) according to claim 1, wherein:
a. optionally, the one or more nano- or micro-particles of an insulating material (51) are silicon dioxide nano- or micro-particles;
b. the one or more plasmonic metallic nano- or micro-particles (52) comprise Au, Ag, Cu, Pt, Pd, Al, Ni, Zn and/or Ti nano- or micro-particles or any combination or alloy thereof, preferably comprise or consist of gold nanoparticles, more preferably gold nanostars; and
c. the one or more nano- or micro-particles (53) of a second semiconductor material are titanium dioxide nano- or micro-particles.

3. The photocatalytic flux reactor (1) according to claim 1, wherein:
a. optionally, the one or more nano- or micro-particles of a first semiconductor or insulating material (51) are nano- or micro-particles of a metal-organic framework (MOF) preferably comprise one of a University of Oslo variant, more preferably comprise UiO-67-bipyridine;
b. the one or more plasmonic photocatalytic metallic nano- or micro-particles (52) are gold nano- or micro-particles, preferably gold nanospheres; and
c. the one or more metal ions (53) are copper ions Cu²⁺ and/or Cu⁺.

4. The photocatalytic flux reactor (1) according to any of the preceding claims, wherein the synthetic polymer of the membrane (3) comprises or consists of polyvinyl alcohol, polycaprolactone, polyethylene oxide, polyacrylonitrile, polylactic acid, polystyrene, polyvinylpyrrolidone, polyethylene terephthalate, polymethyl methacrylate, polyurethane, and/or nylon-6, preferably polyvinyl alcohol.

5. The photocatalytic flux reactor (1) according to any of the preceding claims, comprising at least two inlet ports (21), of which at least one is a liquid inlet port (211), preferably for water, and at least one is a gas inlet port (212), preferably for N₂, CO₂, or air, preferably wherein the exit of the gas inlet port (212) that communicates with the reaction chamber (2) is positioned perpendicular to the plasmonic photocatalytic membrane (3), preferably centred relative to the midpoint of said membrane, more preferably located beneath said membrane.

6. The photocatalytic continuous reactor according to claim 1, wherein the membrane (3) comprising the nano- or micro-particles is made by electrospinning a medium or suspension (31) comprising the synthetic polymer and the plurality of nano- or micro assemblies (5), such that the nano- or micro assemblies (5) become embedded within the nano- or micro-fibres during the electrospinning process.

7. Use of the photocatalytic continuous reactor according to any of claims 1 to 2, and 4 to 6, to generate NH₃ as a product, wherein water and a gas comprising N₂, said gas being preferably atmospheric air or purified N₂, are continuously supplied as reactants to the reactor through at least one inlet port, and wherein NH₃ is continuously obtained from at least one outlet port.

8. Use of the photocatalytic flux reactor (1) according to any of claims 1, and 3 to 6, to generate CH₃OH as a product, wherein water and a gas comprising CO₂, said gas being preferably atmospheric air or purified CO₂, are continuously supplied as reactants to the reactor through at least one inlet port, and wherein CH₃OH is continuously obtained from at least one outlet port.

9. A method for manufacturing a photocatalytic membrane (3) for use in the reactor (1) according to any of claims 1 to 6, comprising the following steps:
a. providing a medium or suspension (31) comprising a synthetic polymer, preferably PVA, and a plurality of nano- or micro assemblies of particles (5), wherein each of said nano- or micro assemblies (5) comprises:
i. one or more nano- or micro-particles of a first semiconductor or insulating material (51);
ii. one or more plasmonic photocatalytic metallic nano- or micro-particles (52); and
iii. one or more nano- or micro-particles of a second semiconductor material or one or more metal ions (53);
b. generating the nano- or micro-fibres by electrospinning the medium (31) provided in step (a), wherein the plurality of nano- or micro assemblies of particles (5) are embedded within said nano- or micro-fibres; and
c. collecting or assembling said nano- or micro-fibres to form a membrane (3).

10. The method for manufacturing a photocatalytic membrane (3) according to claim 9, wherein:
a. the one or more nano- or micro-particles of an insulating material (51) are silicon dioxide nano- or micro-particles;
b. the one or more plasmonic photocatalytic metallic nano- or micro-particles (52) are gold nano- or micro-particles, preferably gold nanostars; and
c. the one or more nano- or micro-particles (53) of a second semiconductor material are titanium dioxide nano- or micro-particles.

11. The method for manufacturing a photocatalytic membrane (3) according to claim 9, wherein:
a. the one or more nano- or micro-particles of a first semiconductor or insulating material (51) are nano- or micro-particles of a metal-organic framework (MOF), preferably comprising an University of Oslo variant, more preferably comprise UiO-67-bipyridine;
b. the one or more plasmonic photocatalytic metallic nano- or micro-particles (52) are gold nano- or micro-particles, preferably gold nanospheres; and
c. the one or more metal ions (53) are copper ions (Cu²⁺).

12. A method for obtaining a continuous flow of NH₃ in a photocatalytic flux reactor (1) according to any of claims 1 to 2 and 4 to 6, comprising at least one inlet port (21), at least one outlet port (22), and a reaction chamber (2) comprising a plasmonic photocatalytic membrane (3), said method comprising the following steps:
a. providing a solution comprising N₂ and H₂O through a first inlet port (21), and/or providing a gas comprising N₂ through a gas inlet port (212) and a liquid comprising H₂O through a liquid inlet port (211);
b. contacting said solution, or the gas and the liquid, with the plasmonic photocatalytic membrane (3), the membrane (3) comprising a plurality of nano- or micro assemblies of particles (5), wherein each of said nano- or micro assemblies (5) comprises:
i. optionally, one or more nano- or micro-particles of a first semiconductor or insulating material (51);
ii. one or more plasmonic photocatalytic metallic nano- or micro-particles (52); and
iii. one or more nano- or micro-particles of a second semiconductor material or one or more metal ions (53);
and wherein said membrane (3) is exposed to light; and
c. obtaining NH₃ through at least one outlet port (22).

13. The method for obtaining a continuous flow of NH₃ in a photocatalytic flux reactor (1) according to claim 12, wherein:
a. the one or more nano- or micro-particles of an insulating material are silicon dioxide nano- or micro-particles;
b. the one or more plasmonic photocatalytic metallic nano- or micro-particles are gold nano- or micro-particles, preferably gold nanostars; and
c. the one or more nano- or micro-particles of a second semiconductor material are titanium dioxide nano- or micro-particles.

14. A method for obtaining a continuous flow of CH₃OH in a photocatalytic flux reactor (1) according to any of claims 1 and 3 to 6, comprising at least one inlet port (21), at least one outlet port (22), and a reaction chamber (2) comprising a plasmonic photocatalytic membrane (3), said method comprising the following steps:
a. providing a solution comprising CO₂ and H₂O through an inlet port (21), and/or providing a gas comprising CO₂ through a gas inlet port (212) and a liquid comprising H₂O through a liquid inlet port (211);
b. contacting said solution, or the gas and liquid, with the plasmonic photocatalytic membrane (3), the membrane (3) comprising a plurality of nano- or micro assemblies of particles (5), wherein each of said nano- or micro assemblies (5) comprises:
i. optionally, one or more nano- or micro-particles of a semiconductor or an insulating material (51);
ii. one or more plasmonic photocatalytic metallic nano- or micro-particles (52); and
iii. one or more nano- or micro-particles of a second semiconductor material or one or more metal ions (53); and wherein said membrane (3) is exposed to light; and
c. obtaining CH₃OH through at least one outlet port (22).

15. The method for obtaining a continuous flow of CH₃OH in a photocatalytic continuous reactor according to claim 14, wherein:
a. the one or more nano- or micro-particles of a first semiconductor or insulating material (51) are nano- or micro-particles of a metal-organic framework (MOF), preferably comprising a University of Oslo variant, more preferably UiO-67-bipyridine;
b. the one or more plasmonic photocatalytic metallic nano- or micro-particles (52) are gold nano- or micro-particles, preferably gold nanospheres; and the one or more metal ions (53) are copper ions (Cu²⁺).
